(19) 

**Europäisches Patentamt**

**European Patent Office**

**Office européen des brevets**

(11) **EP 4 215 362 A1**

(12) **EUROPEAN PATENT APPLICATION**

published in accordance with Art. 153(4) EPC

(43) Date of publication:
26.07.2023 Bulletin 2023/30

(21) Application number: 21869159.0

(22) Date of filing: 30.08.2021

(51) International Patent Classification (IPC):
*B32B 27/02* (2006.01)  *B32B 27/30* (2006.01)
*B65D 65/40* (2006.01)

(52) Cooperative Patent Classification (CPC):
**B32B 27/02; B32B 27/30; B65D 65/40;**
Y02W 30/80

(86) International application number:
**PCT/JP2021/031746**

(87) International publication number:
**WO 2022/059472 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 18.09.2020  JP 2020157779

(71) Applicant: **Asahi Kasei Kabushiki Kaisha**
**Tokyo 1000006 (JP)**

(72) Inventors:
- **ONISHI Tokiharu**
  **Tokyo 100-0006 (JP)**
- **YAMASAKI Naoaki**
  **Tokyo 100-0006 (JP)**

(74) Representative: **D Young & Co LLP**
**120 Holborn**
**London EC1N 2DY (GB)**

(54) **GAS AND WATER VAPOR BARRIER LAMINATED BODY**

(57)    A gas and water vapor barrier laminate includes a paper support, and a halogenated vinyl polymer layer containing a halogenated vinyl polymer on the paper support, and the coverage efficiency of the halogenated vinyl polymer layer is $5.0 \times 10^{-9}$ m$^3$/g or more.

EP 4 215 362 A1

**Description**

TECHNICAL FIELD

The present disclosure relates to a gas and water vapor barrier laminate.

BACKGROUND

In order to preserve the quality of foods and medications, packaging materials for these are required to block gases such as oxygen, nitrogen, carbon dioxide, and water vapor in the atmosphere and provide hermetic sealing. Among various resins, halogenated vinyl polymers such as polyvinylidene chloride have been used in the form of water dispersions coated on supports such as plastic sheets and paper because of their high barrier properties against gas and water vapor.

In recent years, increasing awareness of environmental issues has led to a growing need for paper packaging in place of conventional plastic packaging. In the field of paper packaging materials, in addition to the barrier properties, processing suitability such as yellowing resistance and heat sealability, and a high degree of recyclability are required.

Furthermore, thicker barrier layers of halogenated vinyl polymers are effective in improving barrier properties and processability. However, conventional paper support latex has a problem of reduced pulp dissociability upon recycling when the film thickness is increased, and various studies have been conducted.

PTL 1 discloses a water dispersion of a halogenated vinyl polymer for plastic sheet coating, which is used in conventional plastic packaging.

PTL 2 discloses a moisture-proof paper having good dissociability, in which a vinylidene chloride-based copolymerization resin latex having a specific monomer composition and thickening viscosity is coated on base paper. It also discloses that when the average particle diameter of this resin latex is 120 nm or less, the thickening viscosity during drying can be increased, so that a satisfactory film can be formed.

In addition, PTL 3 discloses moisture-proof paper in which a primer layer formed of a synthetic resin latex having a glass transition temperature of -5 °C or lower and a moisture-proof layer formed from a vinylidene chloride-based copolymerization resin latex having a specific water vapor transmission rate are laminated to base paper.

In addition, PTL 4 discloses a method of producing a barrier laminate in which a paper substrate is sized or coated to reduce penetration of a barrier substance into paper, and a calendering process is carried out to coat the barrier substance directly onto the paper substrate.

CITATION LIST

Patent Literature

PTL1: WO 2013/125699 A1
PTL 2: JP H11-12982 A
PTL 3: JP 2000-73294 A
PTL 4: JP 2020-530409 A

SUMMARY

(Technical Problem)

There is, however, a problem in PTL 1 in that, when the water dispersion of the halogenated vinyl polymer for coating of plastic sheets in PTL 1 is attempted to be used for coating of paper supports, the viscosity is low and pinholes occur due to piercing of the coating film by pulp fibers of the paper support, resulting in insufficient barrier properties.

Furthermore, although the moisture-proof paper of PTLs 2 and 3 certainly has excellent barrier properties and dissociability, the yellowing resistance and heat sealability of the vinylidene chloride-based copolymer latex are insufficient. Increasing the coating amount for compensating for this shortcoming leads to compromised dissociability upon recycling.

Additionally, although the barrier laminate of PTL 4 certainly has excellent barrier properties, it has the problem of inadequate heat sealability.

It is therefore an object of the present disclosure to provide a laminate that is excellent in heat sealability, yellowing resistance, and recyclability, in addition to having barrier properties against gas and water vapor.

(Solution to Problem)

As a result of diligent research to solve the aforementioned problem, the present inventors have discovered that the aforementioned problem can be solved by a laminate having a halogenated vinyl polymer layer that contains a halogenated vinyl polymer and has a specific range of coverage efficiency on a paper support, to thereby completing the present disclosure.

Specifically, the present disclosure is as follows:

(1) A gas and water vapor barrier laminate comprising:

a paper support; and
a halogenated vinyl polymer layer containing a halogenated vinyl polymer on the paper support,
wherein a coverage efficiency of the halogenated vinyl polymer layer is $5.0 \times 10^{-9}$ m$^3$/g or more.

(2) The gas and water vapor barrier laminate according to (1), wherein the halogenated vinyl polymer is a crystalline resin having a crystal melting point of lower than 180 °C.
(3) The gas and water vapor barrier laminate according to (1) or (2), wherein a weight average molecular weight of the halogenated vinyl polymer is 100,000 or more.
(4) The gas and water vapor barrier laminate according to any one of (1) to (3), wherein the halogenated vinyl polymer contains 70% by mass or more of a structural unit derived from vinylidene chloride.
(5) A packaging material or packaging container comprising the gas and water vapor barrier laminate according to any one of (1) to (4).
(6) Use of the packaging material or packaging container according to claim 5 for packaging a food product.
(7) A production method of the gas and water vapor barrier laminate according to any one of (1) to (4), the method comprising:
forming a halogenated vinyl polymer layer by applying a water dispersion of halogenated vinyl polymer particles having an average particle diameter of more than 120 nm on a paper support and then drying the dispersion.
(8) The production method according to (7), wherein a pH of the water dispersion of the halogenated vinyl polymer particles is less than 4.0.

(Advantageous Effect)

According to the present disclosure, a laminate that is excellent in heat sealability, yellowing resistance, and recyclability, in addition to having barrier properties against gas and water vapor, can be provided.

BRIEF DESCRIPTION OF THE DRAWINGS

In the accompanying drawings:

FIG. 1 is an example of a microscope image captured on a cross-section of a laminate (the interface between a paper support and a halogenated vinyl polymer layer) to measure the thickness of the halogenated vinyl polymer layer on the paper support in the laminate; and
FIG. 2 is a diagram illustrating selected points for a manual measurement of the pure water contact angle of a paper support using a contact angle meter.

DETAILED DESCRIPTION

The following provides a detailed description of an embodiment of the present disclosure (hereinafter, referred to as the "present embodiment"). The present embodiment described below is merely an example for describing the present disclosure and is not intended to limit the present disclosure to the following contents. The present disclosure can be implemented with appropriate modifications that do not deviate from the gist thereof.

[Gas and water vapor barrier laminate]

A gas and water vapor barrier laminate of the present embodiment (hereinafter simply referred to as "laminate") includes a paper support and a halogenated vinyl polymer layer containing a halogenated vinyl polymer on the paper support, wherein the coverage efficiency of the halogenated vinyl polymer layer is $5.0 \times 10^{-9}$ m$^3$/g or more.

[Paper support]

The paper support of the present embodiment is made of pulp and a loading filler and may contain various agents as necessary. Further, the paper support is preferably in the form of a sheet.

Examples of the paper support include various known paper supports such as those of high-quality paper, medium-quality paper, coated paper, one-gloss paper, kraft paper, one-gloss kraft paper, bleached kraft paper, glassine paper, paperboard, white paperboard, and liner.

The basis weight of the paper support of the present embodiment is preferably 200 $g/m^2$ or less, more preferably 100 $g/m^2$ or less, even more preferably less than 80 $g/m^2$ or less, and most preferably 70 $g/m^2$ or less from the viewpoint of flexibility for use in packaging materials, containers, cups, and other packaging applications for food, medications, and the like. The lower limit is not particularly set, but a preferred range is 10 $g/m^2$ or more.

As pulp composing the paper support, leaf bleached kraft pulp (LBKP), needle bleached kraft pulp (NBKP), leaf unbleached pulp (LUKP), needle unbleached pulp (NUKP), chemical pulp such as sulfite pulp, mechanical pulp such as stoner-grind pulp and thermo-mechanical pulp, wood fibers such as de-inked pulp and recovered paper pulp, and non-wood fiber obtained from kenaf, bamboo, hemp, etc. can be used, and these can be blended as necessary. Among these, wood fiber pulp, chemical pulp, and mechanical pulp are preferred and chemical pulp is more preferred because they are less likely to contain foreign matter in the base paper, are less likely to discolor over time when used laminates (packaging containers) are recycled for use as recycled paper raw materials, and have high whiteness to thereby give a good surface appearance feel when printing, which provides higher value particularly in applications to packaging materials.

The average fiber length of the pulp fibers composing the paper support is preferably 5 mm or less, and the average fiber width is preferably 100 μm or less. The fiber length and the fiber width of the pulp fibers affect the size of capillaries formed in the gaps between pulp fibers in the paper support. The smaller the fiber length and the fiber width of the pulp fibers are, the thinner the capillaries becomes and the more absorption of the water dispersion of the halogenated vinyl polymer particles, which will be described below, into the paper support layer is suppressed. Furthermore, because the mechanical strength of the paper support is increased, the coating speed of the water dispersion described above can be increased and shaping into packaging containers, etc. becomes easier.

The above average fiber length is more preferably 4 mm or less, more preferably 3 mm or less, and particularly preferably 2 mm or less. The lower limit is not particularly set, but 1 mm or more is preferred to achieve an adequate mechanical strength.

The above average fiber width is more preferably 50 μm or less, even more preferably 40 μm or less, and particularly preferably 30 μm or less. The lower limit is not particularly set, but 10 μm or more is preferred to achieve an adequate mechanical strength.

Note that the average fiber length and the average fiber width of pulp fibers are measured by the following method. Ion-exchanged water and the paper support are measured out so that the amount of the paper support is 0.1% by mass and the total weight is 300 g. The paper support is then defibrated (15,000 rpm × 5 minutes) using a high shear homogenizer (for example, the product name "Excel Auto Homogenizer ED-7" manufactured by Nippon Seiki Co., Ltd. to prepare a slurry. The resultant slurry is cast on mica, air-dried, and observed under a high-resolution scanning microscope (SEM) to make measurements. In an image of particles for measurements, the long diameters (L) and the short diameters (D) of 100 to 150 arbitrarily selected particles are measured, and the average values of these are determined to be used as the average fiber length and the average fiber width.

As the loading filler composing the paper support, known loading fillers such as white carbon, talc, kaolin, clay, calcium bicarbonate, light calcium carbonate, titanium dioxide, zeolite, and synthetic resin loading fillers can be used.

Furthermore, to improve adhesion between the halogenated vinyl polymer and the paper support and improve the yield, the paper support may contain various chemical agents or may be surface-treated with various agents. Examples of various agents include sizing agents, waterproofing agents, and paper strength enhancers.

Examples of the sizing agents include styrene-based sizing agents, alkyl ketene dimer (AKD), alkenyl succinic anhydrides (ASA), neutral rosin sizing agents, rosin sizing agents, and modified rosin emulsion sizing agents. Among these, rosin sizing agents and modified rosin emulsion sizing agents are preferred.

The above rosin sizing agents may be any conventionally known sizing agents in the papermaking field and are not particularly limited. Examples of the rosin-based substances include, for example, reinforced rosins obtained by modifying rosin such as gum rosin, wood rosin, tall oil rosin, with an α,β-unsaturated carboxylic acid such as fumaric acid, maleic acid, or acrylic acid or an anhydride thereof, and rosin esters obtained by reacting rosin as described above with a polyhydric alcohol such as glycerin, trimethylol ethane, trimethylol propane, pentaerythritol, and diglycerin. Furthermore, the rosin sizing agents are also exemplified by those obtained by emulsifying one of the above-described rosins or a mixture thereof, and those obtained by emulsifying some of the above-described rosins independently and mixing the emulsions. In addition, those obtained by adding various polymers to the above emulsified products to further improve the sizing effect are also exemplified.

The content of the sizing agent in the paper support is preferably 0.1 to 10 kg/t in terms of solid content. When the content of the sizing agent is within the above range, water absorption to and repellency of the paper support can be reduced during coating with the water dispersion of the halogenated vinyl polymer particles.

Examples of the waterproofing agents include melamine formaldehyde-based resins having a methylol group, an aldehyde group, or an epoxy group, glyoxal-based resins, polyamide epoxy-based resins, and zirconium ammonium carbonate.

The content of the waterproofing agent in the paper support is preferably 0.02 to 3 parts by mass per 100 parts by mass of pulp. When the content of the waterproofing agent is within the above range, excellent initial adhesive strength can be imparted.

In addition, the paper support may also contain a paper strength enhancer to provide strength. Various known paper strength enhancers can be used, such as polyacrylamide-based resins, polyamide-based resins, polyamine-based resins, acrylic resins, melamine resins, urea resins, and polyamide epichlorohydrin resins. Among these, use of an amphoteric paper strength enhancer is preferred, and an amphoteric polyacrylamide is particularly preferred.

Examples of the amphoteric polyacrylamides include compolymer of acrylamide and an anionic monomer (unsaturated monocarboxylic acids such as acrylic acid, methacrylic acid, 2-(meth)acrylamide-N-glycolic acid, and N-acryloylglycine; unsaturated tricarboxylic acids such as maleic acid, fumaric acid, itaconic acid, and citraconic acid; aconitic acid, unsaturated tricarboxylic acids such as 3-butene-1,2,3-tricarboxylic acid; unsaturated tetracarboxylic acids such as 1-pentene-1,1,4,4-tetracarboxylic acid, 4-pentene-1,2,3,4-tetracarboxylic acid, and 3 1-hexene-1,1,6,6-tetracarboxylic acid; unsaturated sulfonic acids such as vinyl sulfonic acid, styrenesulfonic acid, and 2-acrylamido-2 vinyl sulfonic acid; unsaturated phosphonic acids such as 2-acrylamido-2-methylpropanesulfonic acid and $\alpha$-vinylphosphonic acid; alkali metal salts such as sodium and potassium salts or ammonium salts of the above anionic vinyl monomers) and a cationic monomer (e.g., dimethylaminoethyl methacrylate, diallyldimethylammonium chloride, diallyldiethylammonium chloride, methacroyloxyethyl trimethylammonium methylsulfate, methacroyl oxyethyl trimethyl ammonium methyl chloride, methacrylamidopropyl trimethyl ammonium chloride), and Mannich modified copolymers and Hoffman degradation products of acrylamide and an anionic monomer as described above.

Because an amphoteric polyacrylamide has a self-fixing function, it does not become excessively cationic even when the addition amount is increased to improve inter-paper strength, so that a modified rosin emulsion sizing agent can be stably fixed.

The content of the paper strength enhancer in the paper support is preferably 12 kg/t or more and 20 kg/t or less in terms of solid content. By setting the content of the above paper strength enhancer within the above range, various paper strengths such as the interlayer strength can be imparted. If the content of the paper strength enhancer is below the above range, the interlayer strengths may not be sufficient. On the other hand, if the content of the paper strength enhancer exceeds the above range, improvement in the interlayer strength would be almost saturated, and furthermore, the yield of the added paper strength enhancer may be reduced, which may lead to contamination and bubbles in a paper machine system, resulting in reduced operability. For these reasons, sulfate bands, various anionic, nonionic, or amphoteric yield enhancers, water filtration enhancers, and paper making additives may be used as necessary.

In addition, the paper support may also contain additives such as dyes, fluorescent brighteners, pH adjusters, defoamers, pitch control agents, and slime control agents as necessary. These agents may be any of conventionally known agents in the papermaking field and are not limited.

The content of these additives in the paper support is preferably 500 kg/t or less in terms of solid content.

The paper support may be one layer or may be multi-layered of two or more layers.

The method of producing the paper support is not particularly limited, and the paper support can be produced by papermaking using acidic, neutral, or alkaline papermaking method using a known long-net former, on-top hybrid former, gap former machine, or the like.

The upper limit of the pure water contact angle of the paper support is preferably 160 ° or less, more preferably 150 ° or less, even more preferably 140 ° or less, highly preferably 130 ° or less, and especially preferably 120 ° or less. The lower limit of the pure water contact angle of the paper support is preferably 20 ° or more, more preferably 25 ° or more, and even more preferably 30 ° or more, and still even more preferably 35 ° or more.

When the pure water contact angle of the paper support is within any of the above ranges, excessive penetration of a water dispersion of the halogenated vinyl polymer tends to be suppressed, so that the occurrence of appearance defects of the coating surface such as repellence and poor adhesion can be suppressed.

Note that a measurement can be made by the static droplet method using a contact angle meter, and can be specifically measured by the method described in the Examples section to be described later.

[Coating layer]

The laminate of the present embodiment has a coating layer laminated on a paper support.

The coating layer includes a halogenated vinyl polymer layer, but is not limited to being composed solely of a halogenated vinyl polymer layer and can further include a layer of (co)polymer of a highly polymerizable monomer(s) other than the halogenated vinyl polymer.

In the case where the coating layer contains a layer other than the halogenated vinyl polymer layer, the position of the halogenated vinyl polymer layer in the lamination is not particularly limited, but the halogenated vinyl polymer layer is preferably the topmost layer.

The thickness of the coating layer composing the laminate of the present embodiment is 0.005 $\mu$m or more, more preferably 0.05 $\mu$m or more, even more preferably 0.5 $\mu$m or more, particularly preferably 1 $\mu$m or more, and especially preferably 2 $\mu$m or more, from the viewpoint of making the gas and water vapor barrier properties to be exhibited. If the thickness of the coating layer is less than 0.5 $\mu$m, the heat seal strength tends to be weakened, which may cause breakage. Although the upper limit of the thickness of the coating layer is not particularly set, but 100 $\mu$m or less is preferred, 50 $\mu$m or less is more preferred, and 30 $\mu$m or less is even more preferred, from the viewpoint of the film formability and the impact resistance.

The ratio of the thickness of the halogenated vinyl polymer layer to the total thickness of the coating layer is preferably 0.1 to 99%, more preferably 1 to 95%, and even more preferably 2 to 90%. When the ratio of the thickness of the halogenated vinyl polymer layer is within any of the above ranges, both excellent bending resistance and heat seal strength can be achieved.

[Halogenated vinyl polymer layer]

The halogenated vinyl polymer layer composing the laminate of the present embodiment contains a halogenated vinyl polymer and has a coverage efficiency of $5.0 \times 10^{-9}$ m$^3$/g or more.

The halogenated vinyl polymer layer may be laminated to at least a portion of the paper support and may be a single layer or may have multiple layers.

The thickness of the halogenated vinyl polymer layer on the paper support is preferably 0.005 to 100 $\mu$m, more preferably 0.05 to 50 $\mu$m, and even more preferably 0.5 to 25 $\mu$m, from the viewpoint of the heat sealability, the film formability, and the impact resistance.

Note that the thickness of the halogenated vinyl polymer layer on the paper support can be measured using a microscope, and can be specifically measured by the method described in the Examples section to be described later.

The coverage efficiency of the halogenated vinyl polymer layer is $5.0 \times 10^{-9}$ m$^3$/g or more, preferably $1.0 \times 10^{-8}$ m$^3$/g or more, and more preferably $1.5 \times 10^{-8}$ m$^3$/g or more. When the coverage efficiency of the halogenated vinyl polymer layer is $5.0 \times 10^{-9}$ m$^3$/g or more, a uniform coating film is formed on the surface and excellent barrier and heat seal properties tend to be achieved. The upper limit of the coverage efficiency of the halogenated vinyl polymer layer is not particularly limited, but $1.0 \times 10^{-6}$ m$^3$/g or less is preferred, $0.95 \times 10^{-6}$ m$^3$/g or less is more preferred, and $0.9 \times 10^{-6}$ m$^3$/g or less is even more preferred, and $0.9 \times 10^{-6}$ m$^3$/g or less is further preferred. When the coverage efficiency of the halogenated vinyl polymer layer is $1.0 \times 10^{-6}$ m$^3$/g or less, the coating film tends to be more firmly adhered to the paper support due to the anchor effect.

Note that the coverage efficiency of the halogenated vinyl polymer layer can be determined by the following formula, and can be specifically calculated by the method described in the Examples section to be described later.

Coverage efficiency of halogenated vinyl polymer layer (m$^3$/g) = thickness of halogenated vinyl polymer layer on paper support ($\mu$m) $\times$ 10$^{-6}$ / content of halogenated polymer in laminate (g/m$^2$)

The halogenated vinyl polymer layer of the present embodiment may contain halogenated polymers having gas and water vapor barrier properties other than the halogenated vinyl polymer of the present embodiment, waxes, anchor coating agents, adhesive resins to be described below, and the like.

- Halogenated vinyl polymer -

In the present disclosure, the halogenated vinyl polymer may be a homopolymer containing structural units derived from a halogenated vinyl or a copolymer further containing structural units derived from a monomer that are copolymerizable with the halogenated vinyl (hereinafter simply referred to as "copolymerizable monomer").

The halogenated vinyl monomer may be a chlorinated monomer such as vinyl chloride, vinylidene chloride, 1,2-dichloroethylene, trichloroethylene, or tetrachloroethylene, a fluorinated monomer such as vinyl fluoride, vinylidene fluoride, trifluoroethylene, or fluoroethylene, a brominated monomer such as vinyl bromide, vinylidene bromide, tribromoethylene, or tetrabromoethylene, or the like, for example. One of the above halogenated vinyl monomers may be used individually, or two or more of the above halogenated vinyl monomers may be used in combination. Of these halogenated vinyl monomers, chlorinated monomers excel in terms of ease of polymerization, and vinylidene chloride, in particular, excels in terms of barrier functionality.

Examples of monomers that are copolymerizable with the halogenated vinyl include acrylic acid esters such as methyl acrylate, ethyl acrylate, butyl acrylate, 2-ethylhexyl acrylate, and 2-hydroxyethyl acrylate, methacrylic acid esters such as methyl methacrylate and glycidyl methacrylate, nitriles such as acrylonitrile and methacrylonitrile, and unsaturated carboxylic acids such as acrylic acid, methacrylic acid, itaconic acid, and maleic acid. One of these may be used individually, or two or more of these may be used in combination. Of these, acrylic acid esters, methacrylic acid esters, nitriles, and acrylic acid are preferable, methyl acrylate, methyl methacrylate, methacrylonitrile, and acrylic acid are more preferable, and methyl acrylate and acrylic acid, in particular, are preferable in terms of flexibility of the halogenated vinyl polymer layer.

The halogenated vinyl polymer is preferably a copolymer including 70% by mass or more of structural units derived from a halogenated vinyl (for example, halogenated ethylene) relative to 100% by mass of the halogenated vinyl polymer. When the ratio of structural units derived from halogenated vinyl is within this range, excellent barrier property and film formability tend to be achieved. The ratio is more preferably 75% by mass or more, even more preferably 80% by mass or more, particularly preferably 85% by mass or more, especially preferably 87% by mass or more, and most preferably 90% by mass or more. The upper limit is not particularly limited, but the range for causing good film formability to be exhibited is preferably 99% by mass or less, more preferably 96% by mass or less, and particularly preferably 94% by mass or less. By setting the ratio of the structural units derived from halogenated vinyl within any of the above ranges, the barrier properties are less likely to be reduced due to poor film formation or lack of crystallinity, and the water dispersion of the halogenated vinyl polymer tends to have both excellent barrier properties and film formability.

The weight average molecular weight (Mw) of the halogenated vinyl polymer of the present embodiment is preferably 30,000 or more, more preferably 50,000 or more, even more preferably 80,000 or more, and highly preferably 100,000 or more. The upper limit is not particularly set, but 1,000,000 or less is preferred, 500,000 or less is more preferred, 400,000 or less is further preferred, and 300,000 or less is highly preferred, from the viewpoint that a higher molecular weight increases the glass transition point and reduces the film formability. When the weight average molecular weight of the halogenated vinyl polymer is within any of the above ranges, polymer particles are bonded during the drying process after coating in formation of the halogenated vinyl polymer layer, and consequently the strength of the halogenated vinyl polymer layer tends to increase, which improves barrier properties and the heat sealability. When the weight average molecular weight is within any of the above ranges, the number of unstable polymer ends tends to be reduced and coloration (yellowing) of the polymer layer also tends to be reduced.

Note that the above weight average molecular weight can be measured using GPC (gel permeation chromatography), and can be specifically measured by the method described in the Examples section to be described later.

The halogenated vinyl polymer is preferably a crystalline resin, and the crystal melting point thereof is preferably 180 °C or lower, more preferably 175 °C or lower, even more preferably 170 °C or lower, and highly preferably 165 °C or lower. The lower limit of the crystal melting point is not particularly set, but 50 °C or higher is preferred, 60 °C or higher is more preferred, 70 °C or higher is even more preferred, and 80 °C or higher is highly preferred because having a crystalline structure makes barrier properties to be exhibited.

When the crystal melting point is within any of the above ranges, crystallization of the resin is accelerated in the water dispersion, which tends to increase the elasticity, prevent cracks that occur when the resin cannot follow unevenness on the paper support, and prevent stickiness and blocking of the coating surface during aging at a high temperature after the paper support is rolled.

Note that the above crystal melting point can be measured using a differential scanning calorimeter (DSC), and can be specifically measured by the method described in the Examples section to be described later.

In addition, the content of halogenated vinyl polymer in the laminate is preferably 1 to 150 $g/m^2$, more preferably 2 to 100 $g/m^2$, and even more preferably 3 to 50 $g/m^2$. When the content of halogenated vinyl polymer is within any of the above ranges, a laminate with excellent bending resistance and barrier properties can be provided.

The halogenated vinyl polymer layer of the present embodiment can contain 0.001 to 20 parts by mass of a wax per 100 parts by mass of the halogenated vinyl polymer. The content of the above wax is more preferably 0.005 to 10 parts by mass, and even more preferably 0.01 to 5 part by mass in view of balance of the crystallization rate and exertion of the barrier properties. Only one type of wax may be included, or a wax composition formed of two or more types of waxes may be included.

A wax (or a wax composition) can be added to the water dispersion of the halogenated vinyl polymer in formation of the halogenated vinyl polymer layer which will be described below. The addition of a wax gives effects of improving sliding properties and preventing blocking.

The type of wax that can be used in the present embodiment is not specifically limited and can be a natural or synthetic wax. For example, polyolefin wax, paraffin wax, carnauba wax, beeswax, Chinesewax, ozokerite, montanic acid wax, and an esterified product of any thereof can be used individually or in a composition in which it is contained as a main component (50% by mass or more of the total content). Of these waxes, it is preferable to use polyolefin wax or carnauba wax.

Because the addition of a wax to a halogenated vinyl polymer facilitates progression of crystallization and thereby causes initial physical properties to change, the amount of the wax is preferably adjusted in accordance with the form of the halogenated vinyl polymer layer.

In the case where the halogenated vinyl polymer layer is not the topmost layer in the laminate of the present embodiment, the halogenated vinyl polymer layer preferably contains no wax. The absence of wax tends to slow curing of a coating film of the halogenated vinyl polymer, leading to a better impact resistance of the barrier paper.

[Formation method of halogenated vinyl polymer layer]

The method of forming the halogenated vinyl polymer layer of the present embodiment includes applying a water dispersion of halogenated vinyl polymer particles (hereinafter simply referred to as "water dispersion") on the paper support, followed by drying on and dried.

The method of applying the water dispersion of the halogenated vinyl polymer particles on the paper support in the present embodiment is not particularly limited, and the water dispersion can be applied using known coating apparatus and coating system. As the coating method, gravure methods such as the direct gravure method, roll coating methods such as the 3-roll beat coating method and the bottom feed 3-roll reverse coating method, the doctor knife method, the air knife method, the die coating method, the bar coating method, the dipping method, the spray coating method, the blade coating method, the curtain coating method, the size press coating method, the gate roll coating method, and the like can be applied, for example.

The amount of the water dispersion applied during application is not limited, and is preferably adjusted according to the desired thickness of the halogenated vinyl polymer layer. A desired halogenated vinyl polymer layer can be formed by repeating the cycle of application and drying one or more times. When the application amount is set so that drying is not insufficient and no solvent remains, a laminate that effectively exhibits physical properties such as gas and water vapor barrier properties, heat sealability, yellowing resistance, and recyclability can be obtained.

Examples of drying methods that can be used include, but are not specifically limited to, a method using natural drying, a method of drying in an oven set to a specific temperature, and a method of drying using a dryer accompanied to a coater, , for example, a steam heating heater, a gas heater, an infrared heater, an electric heater, a hot air heater, a microwave dryer, a cylinder dryer, and the like. The drying conditions can be selected as appropriate depending on the drying method, but in the case of drying in an oven, for example, drying is preferably performed for approximately 1 second to 5 minutes at a temperature of 60 °C to 200 °C.

- Water dispersion of halogenated vinyl polymer -

The water dispersion of halogenated vinyl polymer particles of the present embodiment contains halogenated vinyl polymer particles and water, and is obtained by emulsion polymerization of a monomer containing halogenated vinyl, for example.

The emulsion polymerization method of the halogenated vinyl polymer is not particularly limited, and commonly known methods can be adopted.

The content of halogenated vinyl polymer particles in the water dispersion of the present embodiment is preferably 20% by mass or more, more preferably 30% by mass or more, and even more preferably 40% by mass or more in terms of solid content, from the viewpoint of preventing reduction of the barrier properties due to penetration into the paper support or piercing by pulp fibers. Moreover, the upper limit is not particularly set, but is 90% by mass or less is preferable, 80% by mass or less is more preferable, 70% by mass or less is even more preferable, and 65% by mass or less is particularly preferable. By setting the content of halogenated vinyl polymer particles within any of these ranges, a water dispersion of the vinylidene halide polymer with a suitable viscosity can be obtained.

Note that the content of the halogenated vinyl polymer particles is a value that is measured by mass loss on drying and is measured by the following method. A measurement is made using SMART System 5 manufactured by CEM Corporation by dripping 2 g to 4 g of the water dispersion (for example, a latex) onto a glass fiber pad using a dropper, heating the water dispersion with a power of 40%, and then calculating the solid content (% by mass) after drying by the formula: (mass after drying / mass of the water dispersion) $\times$ 100.

In the case where the water dispersion also contains a resin other than the halogenated vinyl polymer, the content of the halogenated vinyl polymer alone is also determined as follows. After a weighing pan is degreased with acetone or other agent, $1 \pm 0.1$ g of the water dispersion is measured out to the order of 0.1 mg and is spread evenly on the bottom of the weighing pan. (A) The water dispersion is dried at 80 °C for 120 minutes using a hot-air dryer or the like. After drying is completed, the weighing pan is transferred into a desiccator, cooled to room temperature, and then weighed. The procedure (A) is repeated until the difference from the previous measurement becomes 0.5% or less in mass fraction. The dry mass of the water dispersion is thus obtained. Next, the resultant dried product is collected and dissolved in a solvent that dissolves resins other than the halogenated vinyl polymer. This solvent is preferably acetone. The entire solvent-insoluble fraction is placed on a weighing pan, and is spread evenly on the bottom of the weighing pan. (B) Drying is performed at 105 °C for 60 minutes. After drying is completed, the weighing pan is transferred into a desiccator, cooled to room temperature, and then weighed to the order of 0.1 mg. The procedure (B) is repeated until the difference from the previous measurement becomes less than 2% in mass fraction. The mass of the solvent-insoluble fraction obtained in this way is the mass of the halogenated vinyl polymer alone, and "mass of solvent-insoluble fraction (g) / dry mass of the water dispersion (g)" is determined to be used as the content of the halogenated vinyl polymer particles.

From the viewpoint of preventing reduction of barrier properties due to piercing by pulp fiber, the viscosity of a water dispersion of the halogenated vinyl polymer is preferably 2 mPa·s or more, more preferably 3 mPa·s or more, even more preferably 4 mPa·s or more, particularly preferably 5 mPa·s or more, and especially preferably 6 mPa·s or more. From the viewpoint of leveling, the viscosity is preferably 1 MPa·s or less, more preferably $1 \times 10^{-2}$ MPa·s or less, even more preferably $1 \times 10^{-4}$ MPa·s or less, particularly preferably $1 \times 10^{-5}$ MPa·s or less, and especially preferably $1 \times 10^{-6}$ MPa·s or less.

Note that the viscosity can be measured as follows. A water dispersion of the halogenated vinyl polymer is rotated using BL II-type viscometer manufactured by Toki Sangyo Co., Ltd. in a thermostatic bath for 20 to 30 seconds while the temperature is adjusted to 20 °C. Then, the rotation is stopped while the clamp lever is pressed down, and the pointer value is read out. The rotor number or the number of rotations is selected as appropriate depending on the viscosity of the water dispersion of the halogenated vinyl polymer, and the viscosity is calculated by multiplying the number of rotations by the factor finder corresponding to the rotor number.

It is preferable that the halogenated vinyl polymer in the water dispersion of the present embodiment is particulate and the average particle diameter is greater than 120 nm. The average particle diameter of the halogenated vinyl polymer is closely related to the film formability, barrier properties, heat sealability, and dissociability of the halogenated vinyl polymer layer. When the average particle diameter is within the above range, evaporation of water is accelerated in the process of applying the water dispersion on the paper support and drying, and the polymer particles are bound and unified with each other before they are sucked into capillaries formed in the gaps between the pulp fibers of the paper. As a result, a more uniform layer is formed with a smaller amount of polymer, resulting in improved barrier properties and improved heat sealability. Furthermore, because the polymer layer and the paper support is bonded not excessively strongly (the polymer is penetrated into the paper not excessively) at the interface, the dissociability is improved when the paper support and the halogenated vinyl polymer layer are dissociated in water during the process of recycling the laminate.

The average particle diameter of halogenated vinyl polymer is preferably 130 nm or more, more preferably 140 nm or more, even more preferably 150 nm, particularly preferably 160 nm or more, and most preferably 170 nm or more. Because the effect described above increases with an increase in the average particle diameter, the upper limit is not particularly set. However, in view of the coatability and the storage stability (emulsion stability) of the water dispersion, 400 nm or less is preferred, 300 nm or less is more preferred, 250 nm or less is even more preferred, and 200 nm or less is particularly preferred.

Note that the above-mentioned average particle diameter refers to the value measured by the dynamic light scattering method, and can be specifically measured by the method described in the Examples section to be described later.

There are no limitations on the emulsifier used for production of the water dispersion of halogenated polymer particles of the present embodiment, but examples include anionic amphiphilic compounds such as carboxylic acid salts, sulfic acid ester salts, sulfonic acid salts, and phosphoric acid ester salts, gemini amphiphilic compounds, and nonionic amphiphilic compounds, for example.

Carboxylic acid salts are exemplified by soaps, and examples thereof include sodium octanoate, sodium decanoate, sodium laurate, sodium myristate, sodium palmitate, sodium stearate, sodium oleate, sodium perfluorooctanoate, sodium N-lauroylsarcosinate, sodium cocoyl glutamate, and alpha-sulfofatty acid methyl ester salts.

Examples of sulfic acid ester salts include higher alcohol sulfic acid ester salts, higher alkyl ether sulfic acid ester salts, sulfated oils, sulfated fatty acid esters, and sulfated fatty acids, for example, and the term sulfic acid ester salt is a general term for anionic amphiphilic compounds produced by sulfating a higher alcohol having an alkyl group.

Examples of higher alcohol sulfuric acid ester salts include sodium lauryl sulfate, sodium myristyl sulfate, sodium cetyl sulfate, sodium stearyl sulfate, and sodium oleyl sulfate.

The term higher alkyl ether sulfuric acid ester salt is a general term for amphipathic compounds obtained by adding ethylene oxide to a higher alcohol and then converting to a sulfuric acid ester salt. Examples of higher alkyl ether sulfic acid ester salts include sodium lauryl ether sulfate, sodium myristyl ether sulfate, sodium cetyl ether sulfate, sodium stearyl ether sulfate, sodium oleyl ether sulfate, and secondary alcohol ethylene oxide adduct sulfuric acid ester salts.

The term sulfated oil is a general term for products produced by sulfating and neutralizing a wax obtained through esterification of a higher fatty acid and a higher aliphatic alcohol. Examples include Turkey red oil obtained by sulfating castor oil, sulfated olive oil, sulfated beef tallow, sulfated peanut oil, sulfated sperm whale oil, and esters thereof.

The terms sulfated fatty acid ester and sulfated fatty acid are general terms for compounds that are converted to sulfuric acid ester salt-type anionic amphiphilic compounds through sulfation of a fatty acid or fatty acid ester including a hydroxyl group or double bond. For example, not to mention $\alpha$-sulfonated fatty acids, compounds produced through sulfate esterification of an epoxidized products of an unsaturated fatty acid or an unsaturated fatty acid ester are exemplified.

Examples of sulfonic acid salts are exemplified by compounds having a structure represented by R-SO$_3$Na, and examples thereof include sodium 1-hexanesulfonate, sodium 1-octanesulfonate, sodium 1-decanesulfonate, sodium 1-dodecanesulfonate, sodium perfluorobutanesulfonate, sodium linear alkylbenzenesulfonate, sodium naphthalenesulfonate, sodium naphthalenedisulfonate, sodium naphthalenetrisulfonate, sodium butylnaphthalenesulfonate, and sodium perfluorooctanesulfonate. The term sodium linear alkylbenzenesulfonate is inclusive of sodium toluenesulfonate, sodium cumenesulfonate, sodium octylbenzenesulfonate, and sodium dodecylbenzenesulfonate.

Examples of phosphoric acid ester salts include lauryl phosphoric acid, sodium lauryl phosphate, and potassium lauryl phosphate. Compounds obtained through addition of ethylene oxide to these compounds are also included.

A gemini amphiphilic compound is a compound that includes two fatty acid chains in a single molecule and examples thereof include dialkyl sulfosuccinate salts.

Among the above-mentioned anionic amphiphilic compounds and gemini amphiphilic compounds, soaps, sulfonic acid salts, and gemini amphiphilic compounds are preferred, sodium dodecylbenzenesulfonate, sodium alkyl sulfonates, sodium palmitate, and dialkylsulfosuccinate ester salts are more preferred, sodium dodecylbenzenesulfonate and dialkylsulfosuccinate ester salts are more preferred, and sodium dodecylbenzenesulfonate is particularly preferred.

Furthermore, nonionic emulsifiers are amphiphilic compounds that have hydrophilic groups that do not dissociate ionically in water, such as hydroxyl groups and ether bonds (such as polyoxyethylene chains).

Examples of nonionic amphiphilic compounds include ester-type amphiphilic compounds, ether-type amphiphilic compounds, and ester ether-type amphiphilic compounds, and alkanolamide-type amphiphilic compounds, alkyl glycosides, and higher alcohols.

Examples of ester-type amphiphilic compounds include glyceryl laurate, glyceryl monostearate, sorbitan fatty acid esters, and sucrose fatty acid esters.

Examples of ether-type amphiphilic compounds include polyoxyethylene alkyl ethers, pentaethylene glycol monododecyl ether, and octaethylene glycol monododecyl ether.

Examples of ester ether-type amphiphilic compounds include polyoxyethylene glycerin fatty acid esters, polyoxyethylene castor oil, polyoxyethylene hydrogenated castor oil, polyoxyethylenesorbitan fatty acid esters, polyoxyethylene sorbitol fatty acid esters, sorbitan fatty acid ester polyethylene hexytane fatty acid esters, and sorbitan fatty acid ester polyethylene glycols.

Examples of alkanol amide-type amphiphilic compounds include lauric diethanolamide, oleic diethanolamide, stearic diethanolamide, and coconut oil acid diethanolamide.

Examples of alkyl glycosides include octyl glucoside, decyl glucoside, and lauryl glucoside.

Examples of higher alcohols include cetanol, stearyl alcohol, and oleyl alcohol.

These anionic and nonionic emulsifiers may be used alone or in a mixture of two or more.

In the present embodiment, the pH of the water dispersion is preferably less than 4.0. The pH of the water dispersion significantly affects the yellowing resistance of the halogenated vinyl polymer layer after it is applied. The color of the halogenated vinyl polymer turns yellow (yellowish discoloration) when dehalogenated hydrogen is generated from unstable polymer chain ends, etc., which creates a chain of conjugated bonds in the main chain. Such yellowing tends to occur at high temperatures, and in the manufacture of the laminate of the present embodiment, it tends to occur in the drying process. When the pH is low, i.e., when the concentration of hydrogen ions in water is high, dehalogenated hydrogen is less likely to be generated in the water dispersion. The pH of the water dispersion is more preferably 3.5 or less, even more preferably 3.0 or less, and particularly preferably 2.5 or less. The lower limit is not particularly set, but 1.0 or more is preferred in view of corrosion of coating apparatuses.

Note that the pH of the water dispersion can be measured using a pH meter, and can be specifically measured by the method described in the Examples section to be described later.

The surface tension of the water dispersion of the present embodiment is appropriately selected from the viewpoint of physical properties such as surface contact angle and permeability of the paper support, and it is preferably 10 mN/m or more, more preferably 20 mN/m or more, and even more preferably 30 mN/m or more. The upper limit is not particularly set, but 60 mN/m or less is preferred, 55 mN/m or less is more preferred, and 45 mN/m or less is even more preferred. When the surface tension of the water dispersion is within any of these ranges, the water dispersion can be uniformly applied onto the surface of the paper support, and a film of a halogenated vinyl polymer layer is tightly formed, so that defects at the interface are less likely to occur and gas and water vapor barrier properties are made to be exhibited.

Note that a measurement of the surface tension of a water dispersion can be performed by the plate method using an automatic surface tensiometer CBVP-Z (manufactured by Kyowa Interface Science Co., Ltd.) inside a constant temperature chamber of 20 °C and 55% RH.

[Anchor coating layer]

The laminate of the present embodiment may also have an anchor coating layer containing an anchor coating agent between the paper support and the coating layer, if necessary. The anchor coating layer improves adhesion between the paper support and the coating layer.

Examples of the anchor coating agent include various resins such as (low, medium, and high density) polyethylene-based resins, polypropylene-based resins, polyacrylic ester-based resins (such as polymethyl acrylate, polyethyl acrylate, and polybutyl acrylate), polymethacrylic ester-based resins (such as polymethyl methacrylate, polyethyl methacrylate, polybutyl methacrylate, and poly 2-ethylhexylmethacrylate), polystyrene-based resins, polyacrylic styrene butadiene-based resins, acrylic resins, styrene acrylic resins, styrene butadiene-based resins, polyvinyl chloride-based resins, polyvinylidene chloride-based resins, polyvinylbutyral, polyvinylformal, ethylene vinyl acetate-based resins, paraffin-based resins, urethane-based resins, isocyanate-based resins, polyester-based resins, oxazoline-based resins, carbodiimide-based resins, vinyl acetate-butyl acrylate-based copolymers, maleic anhydride copolymer, and acrylic acid-methyl acrylate-based copolymer; polyvinyl alcohols such as fully saponified polyvinyl alcohols, partially saponified polyvinyl alcohols, and ethylene copolymer polyvinyl alcohols; proteins such as casein, soy protein, and synthetic protein proteins, starch such as oxidized starch, cationized starch, urea phosphate esterified starch, hydroxyethyl etherified starch, oxidized modified starch, cellulose derivatives such as carboxymethyl cellulose, hydroxymethyl cellulose, and hydroxymethyl cellulose, sodium alginate, polyvinylpyrrolidone, and sodium alginate.

Among the anchor coating agents listed above, resins such as (low, medium, and high density) polyethylene-based resins, polypropylene-based resins, polyacrylic ester-based resins (such as polymethyl acrylate, polyethyl acrylate, and polybutyl acrylate), polymethacrylic ester-based resins (such as polymethyl methacrylate, polyethyl methacrylate, polybutyl methacrylate, and poly 2-ethylhexylmethacrylate), polystyrene-based resins, polyacrylic styrene butadiene-based resins, acrylic resins, styrene acrylic resins, styrene butadiene-based resins, polyvinyl chloride-based resins, polyvinylidene chloride-based resins, polyvinylbutyral, polyvinylformal, ethylene vinyl acetate-based resins, paraffin-based resins, urethane-based resins, isocyanate-based resins, polyester-based resins, oxazoline-based resins, carbodiimide-based resins, various vinyl acetate-butyl acrylate-based copolymers, maleic anhydride copolymer, andacrylic acid-methyl acrylate-based copolymers are preferred because they have high water resistance and elusion from the anchor coating layer is thus less likely to occur upon application of a water dispersion of halogenated vinyl polymer particles. From the viewpoint of adhesion, polyacrylstyrene butadiene-based resins, acrylic resins, styrene acrylic resins, styrene butadiene-based resins, polyvinyl chloride-based resins, polyvinylidene chloride-based resins, urethan-based resins, isocyanate-based resins, polyester-based resins, various vinyl acetate-butyl acrylate-based copolymers, and acrylic acid-methyl acrylate-based copolymers are more preferred. Polyacrylic styrene butadiene-based resins, acrylic resins, styrene acrylic resins, and styrene butadiene-based resins are most preferred. Surface treatment with these anchor coating agents can hydrophobize the surface of the paper support composed of cellulose that has hydrophilicity, improve the smoothness of the paper support, reduce the permeability of the water dispersion of halogenated polymer particles, reduce the application amount, and provide an further excellent adhesion.

There are no limitations on the form of the anchor coating agent, and a solution type anchor coating agent containing an organic solvent, a water solution type anchor coating agent, a water emulsion type anchor coating agents or the like can be used.

Examples of solvents for dissolving or dispersing the above anchor coating agent include alcohols, esters, glycol ethers, glycol ether acetates, ketones, ethers, chlorides, hydrocarbons, 2-nitropropane, and water.

The term alcohols is a general term for hydrocarbons partially substituted with a hydroxyl group, and examples include methanol, ethanol, isopropanol, n-propanol, secondary butanol, isobutanol, and n-butanol.

Esters are organic solvents having an ester bond in the molecule, and examples thereof include methyl acetate, ethyl acetate, isopropyl acetate, n-propyl acetate, secondary butyl acetate, isobutyl acetate, n-butyl acetate, methylamyl acetate, and ethyl lactate.

The term glycol ethers is a general term for substances having both an ether group and a hydroxyl group in the molecule, and examples thereof include methyloxytol, ethyloxytol, isopropyloxytol, butyloxytol, methyl dioxytol, ethyl dioxytol, and butyl dioxytol.

The term glycol ether acetate is a general term for substances having an ether group, a hydroxyl group, and an acetyl group in the molecule, and examples thereof include methyloxytol acetate, ethyloxytol acetate, and butyldioxyl acetate.

The term ketones is a general term for substances having a ketone group in the molecule, and examples thereof include acetone, methyl ethyl ketone, methyl isobutyl ketone, cyclohexane, methyl cyclohexane, ethyl amyl ketone, diisobutyl ketone, diacetone alcohol, and isophorone.

The term ethers is a general term for substances having an ether group in the molecule, and examples thereof include diethyl ether, isopropyl ether, tetrahydrofuran, and 1.4-dioxane.

The term chlorides is a general term for substances having a chloro group in the molecule, and examples thereof include methylene dichloride, trichloroethane, perchloroethylene, and dichloropropane.

Hydrocarbons are molecules composed of carbon and hydrogen, and are classified into aliphatic hydrocarbons and aromatic hydrocarbons. Examples of aliphatic hydrocarbons include cyclohexane, heptane, hexane, white spirit, octane, SBP, Shellsol, and isoparaffin. Examples of aromatic hydrocarbons include benzene, toluene, and xylene.

Alcohols, esters, ketones, and hydrocarbons are preferred solvents for dissolving or dispersing the anchor coating agent from the viewpoint of the solubility of the anchor coating agent. Methanol, isopropanol, n-propanol, ethyl acetate, methyl acetate, secondary butyl acetate, isobutyl acetate, n-butyl acetate, acetone, tetrahydrofuran, methyl ethyl ketone, benzene, toluene, and xylene are more preferred from the viewpoint of the evaporation rate, the surface tension, and the viscosity,.

The above solvents may be used alone, or two or more these may be mixed to adjust the solubility of the anchor coating agent and the volatility of the solvent.

Furthermore, it is preferable that the anchor coating agent is used in the form of a water emulsion in which polymer particles are dispersed in water from an environmental viewpoint.

The arithmetic mean roughness Ra of the surface of the paper support which has been surface treated with the anchor coating agent (on which the anchor coating layer is lamimated) and on which the water dispersion of the halogenated vinyl polymer particles is to be applied is preferably 20 $\mu$m or less, more preferably 10 $\mu$m or less, and more preferably 5 $\mu$m or less. When the arithmetic mean roughness is 20 $\mu$m or less, breakage of the coating layer due to piercing of fibers of the paper support and peeling off due to unevenness can be prevented and the application amount (content) of the halogenated vinyl polymer can be reduced. The lower limit of the above arithmetic mean roughness Ra is not particularly set, but 0.1 $\mu$m or more is preferred, 0.3 $\mu$m or more is more preferred, and 0.5 $\mu$m or more is even more preferred.

Note that the above arithmetic mean roughness Ra is measured by the following method.

Calibration is performed using SJ-500 (manufactured by Mitutoyo Corporation) using the standard sample supplied with the instrument with the following settings.

<Calibration setting (roughness calibration)>

Standard: JIS 1994
Filter: GAUSS
Number of sections: 5
Cutoff value: 2.5 mm
Measurement speed: 0.5 mm/s
Nominal value of standard sample: 2.970
After the measured Ra is confirmed to fall within $\pm$3% of the nominal value of the standard sample, calibration is performed.

Conditions for sample evaluation>

Standard: ISO 1997
Curve: R
Filter: GAUSS
lc: 0.8 mm
ls: 2.5 mm
Number of sections: 5
Front run/rear run: lc
Waveform removal: OFF
Curve correction: OFF
Parameters: Ra, Rz, and Rq

<Measurement conditions>

Measurement speed: 0.5 mm/s

Return speed: 10 mm/s
Range: 800 mm
Over range: ESC
Auto return: OFF
X-axis drive: ON
Arm correction: OFF
Post-interruption calculation: OFF
Polarity switch: +

A sample of a paper support provided with an anchor coating layer is horizontally set. The detector is lowered until the stylus touches the sample and the height of the main panel becomes 0 mm, and the START/STOP switch is pressed to make a measurement. The arithmetic mean roughness Ra is determined as follows. Only the standard length (I) is extracted from the roughness curve in the direction of the mean line thereof. When the roughness curve is expressed as y = f ($\chi$) in which the X axis represents the mean line of this extracted portion and the Y axis represents the vertical magnification, the arithmetic mean roughness Ra is the value in micrometers ($\mu$m) determined from the following formula.

[Mathematical formula 1]

$$Ra = \frac{1}{\ell} \int_0^\ell |f(x)| dx$$

The thickness of the anchor coating layer is preferably 200 $\mu$m or less, more preferably 100 $\mu$m or less, even more preferably 50 $\mu$m or less, and most preferably 25 $\mu$m or less. The lower limit is not particularly set, but 0.001 $\mu$m or more is preferred, 0.01 $\mu$m or more is more preferred, 0.1 $\mu$m or more is even more preferred, and 1 $\mu$m or more is most preferred. When the thickness of the anchor coating layer is set to fall within any of these ranges, cracking of the coating layer is less likely to occur when the laminate is bent in terms of flexibility of the laminate, penetration of the water dispersion of the halogenated vinyl polymer particles into the paper support is prevented, and a high degree of adhesion can be obtained through surface modification of cellulose fibers of the paper support.
There are no limitations on the method of application of the anchor coating agent on the paper support, but a rod metering size press, a pond style size press, a blade coater, a bar coater, a roll coater, an air knife coater, a reverse roll coater, a curtain coater, a spray coater, a size press coater, a dip coater, a gate roll coater, and the like can be used.
In addition, there are no limitations on the drying method of the anchor coating agent. Curing methods such as ultraviolet or electron beam curing may be used, but the method of drying by applying heat is preferred. There are no limitations on the method of drying by heat, and generally-used methods using a steam heating heater, a gas heater, an infrared heater, a hot air heating heater, a microwave heater, a cylinder dryers, and the like can be used.
In addition, the above anchor coating layer can also contain a pigment. As the pigment, inorganic pigments such as kaolin, clay, engineered kaolin, delaminated clay, heavy calcium carbonate, light calcium carbonate, mica, talc, titanium dioxide, barium sulfate, calcium sulfate, zinc oxide, silicic acid, silicates, colloidal silica, and satin white; and organic pigments such as solid, hollow, or core-shell type organic pigment can be used alone or in mixtures of two or more of these. Of these, colloidal silica is most desirable from the viewpoint of improving blocking properties.
The content of the pigment is preferably 300 parts by mass or less, more preferably 250 parts by mass or less, even more preferably 150 parts by mass or less, and most preferably 100 parts by mass or less, in dry mass, per 100 parts by mass of the anchor coating agent.
Furthermore, the above anchor coating agent may also be included in the halogenated vinyl polymer layer. By mixing the above anchor coating agent and the water dispersion of halogenated vinyl polymer particles as appropriate and applying the mixture, the number of application steps can be reduced, adhesion to the paper support can be strengthened, and yellowing of the halogenated vinyl polymer can be suppressed. However, if the content of the anchor coating agent is too high, the barrier properties that are characteristic to the halogenated vinyl polymer would be impaired. Hence, the content of the anchor coating agent is preferably 50% by mass or less, more preferably 40% by mass or less, even more preferably 20% by mass, and most preferably 10% or less in terms of the resin solid content of the anchor coating agent, with respect to the resin solid content of the halogenated polymer. The lower limit is not particularly set, but 0.001% by mass or more is preferred, 0.01% or more is more preferred, 0.1% or more is even more preferred, and 1% or more is most preferred. If 50% by mass or more of the anchor coating agent is added, the barrier properties of the halogenated vinyl polymer are lost; or if the content is 0.001% by mass or less, an excellent adhesion cannot be achieved.
To improve adhesion between the paper support and the coating layer, the surface of the paper support or the surface of the anchor coating layer, if the anchor coating layer is present, can be activated in advance before formation of the coating layer. The method of activation of the surface of the paper support or the surface of the anchor coating layer may be a method in which a corona discharge treatment, plasma discharge treatment, strong acid treatment, electron beam treatment, ultraviolet light treatment, flame treatment, or the like is performed in order to introduce a hydrophilic component such as a hydroxyl group, a carboxyl group, an ester group, a carboxylic acid group, an ether bond, an amino group, an imino group, an amide group, or a sulfuric acid group at the surface of the paper support or the surface of the anchor coating layer.

The laminate of the present embodiment may have a general-purpose resin film between any layers of the paper support, the anchor coating layer, the coating layer, and an adhesive resin film to be described below, for maintaining the molded shape.

The adhesive resin film is not particularly limited, but examples thereof include films of fossil resource-derived resins such as polyester, polyvinyl alcohol, ethylene-vinyl alcohol copolymer, polypropylene, polyethylene, polystyren, epolyethylene terephthalate, polybutylene terephthalate, polymethylpentene, polyvinyl chloride, polyacrylonitrile, acrylonitrile-butadiene-styrene, acrylonitrile-styrene-poly(meth)acryl, polyvinylidene chloride, polyamide (nylon), polyacetal, and polycarbonate; and biologically-derived resins such as polylactic acid (PLA), cellulose acetate, polybutylene succinate (PBS), polybutylene succinate adipate (PBSA), biopolyethylene, biopolyethylene terephthalate, and biopolyurethane, for example.

Note that the term biologically-derived resin refers to a polymer material that includes a substance derived from a renewable organic resource as the raw materials, is obtained through chemical or biological synthesis, and has a number average molecular weight (Mn) of 1,000 or more.

In addition, as fossil resource-derived resins and biologically-derived resins, both resins having biodegradability (biodegradable resins) such as polylactic acid (PLA), cellulose acetate, and polybutylene succinate (PBSA), and resins without biodegradability such as polyethylene, polypropylene, polyester, polyethylene terephthalate, polyamide (nylon), and biopolyethylene can be used.

Note that biodegradable resins refer to resins that are degraded to molecules by the action of microorganisms, thereby eventually return to the nature in the form of carbon dioxide and water.

A method of laminating a resin film is to laminate a resin mentioned above into a resin laminate layer using the extrusion lamination method. In the case where the resin laminate layer is a film bonding layer, the resin film mentioned above can be bonded as a resin laminate layer by the dry laminating method, the sand laminating method, or the like. The resin laminate layer is preferably on the surface of the paper support on which the halogenated polymer layer is present.

In the present embodiment, when the resin laminate layer is a film bonding layer, among the above-mentioned films, a film containing a resin such as polyvinyl alcohol, ethylene-vinyl alcohol copolymer, polyvinylidene chloride, or polyacrylonitrile, a film formed by bonding a metallic foil made of a metal such as aluminum onto a film made of any of the above-mentioned resins, and a barrier film, e.g., a vapor-deposited film, in which a metal such as aluminum or an inorganic oxide such as silicon oxide or aluminum oxide is vapor-deposited onto the a film made of any of the above-mentioned resins are preferred, and a vapor-deposited film is more preferred. Depending on the purpose, one or more layers of these films can be bonded.

The gas and water vapor barrier laminate of the present embodiment has a moisture resistance (water vapor transmission rate) of preferably 200 $g/m^2 \cdot 24$ hr or less, more preferably 100 $g/m^2 \cdot 24$ hr or less, even more preferably 50 $g/m^2 \cdot 24$ hr or less, further preferably 10 $g/m^2 \cdot 24$ hr or less, and most preferably 5 $g/m^2 \cdot 24$ hr or less.

Note that the above moisture resistance (water vapor transmission rate) can be measured by a moisture permeability test using a moisture permeable cup, and specifically can be measured by the method described in the Examples section to be described later.

The laminate of the present embodiment can be used as a packaging material for packaging applications such as food products, containers, cups, etc., or various industrial materials, wherein the laminate is used as is, or it is laminated with various resins, etc., or it is bonded with various general purpose films, barrier films, aluminum foil, or the like. Among these, the laminate can be suitably used as a packaging material for food and the like, such as containers and cups.

Packaging materials or packaging containers including the laminate of the present embodiment are not limited, but examples thereof include liquid paper packs (such as brick type packs, gable top type packs, and paper cans), paper trays (such as box-making trays, squeeze-forming trays, and pulp molds), decorative boxes, packaging paper, labels, corrugated boards, 4-side seal bags, 3-side seal bags, pillow packaging bags, stick bags, gusset bags, square bottom bags, standing pouches, deep draw containers, vacuum packaging bags, skin packs, zipper bags, spout pouches, twist packages, wrapped packages, trays, cups, bottles, caps, and inner plugs. Pillow packaging bags are particularly preferred for food packaging applications.

In the case where the laminate of the present embodiment is used as a packaging material or packaging container for food or the like, particularly as a flexible packaging material, an adhesive resin having heat sealability other than the halogenated vinyl polymer can be further laminated. This improves the heat seal strength and the low-temperature sealability, which enables protection of contents from deterioration caused by oxygen and moisture, and longer shelf life.

The above adhesive resin that imparts the heat sealability preferably includes at least one selected from the group consisting of polyurethane-based resins, polyester-based resins, acrylic resins, and vinyl acetate-based copolymers, for example. Of these, polyurethane-based resins are particularly preferred. The content of these resins is not limited as long as the properties of the adhesive resin are not compromised, and may be 50% by mass or more of the adhesive resin.

Note that flexible packaging materials refer to packaging materials composed of materials that are flexible.

In addition, the adhesive resin may also include polyvinyl butyral-based resins, vinyl benzene-based resins, polyamide-based resins, vinyl chloride/vinyl acetate-based copolymers, vinyl chloride/polyester-based resins, chlorinated polyolefins (such as chlorinated polypropylene and chlorinated polyethylene), styrene-based block copolymers and their derivatives (such as styrene-isoprene block copolymers, styrene-butadiene block copolymers, and hydrogenated and maleic anhydride modified products thereof), and the like, to the extent that the properties of the adhesive resin are not impaired, preferably in the range of less than 50 mass, more preferably in the range of less than 40% by mass, and particularly preferably in the range of less than 30% by mass.

Polyurethane-based resins as used herein are reaction products of polyisocyanate and polyol.

Examples of polyisocyanate compounds used in synthesis of polyurethane-based resins are not limited as long as they are organic polyisocyanate compounds containing two or more isocyanate groups per molecule, and examples include aromatic, aliphatic, and alicyclic organic diisocyanates such as tolylene diisocyanate, diphenylmethane diisocyanate, cyclohexane diisocyanate, trilene diisocyanate, hexamethylene diisocyanate (HDI), trimethylhexane diisocyanate, 1,5-naphthalene diisocyanate, xylylene diisocyanate, 2,6-diisocyanate methylcaproate, isophorone diisocyanate (IPDI), methylcyclohexane-2,4- (or 2,6-) diisocyanate, and 4,4'-methylenebis(cyclohexyl isocyanate). These components may be used alone or in a combination of two or more. Aliphatic isocyanates are preferred from the viewpoint of preventing coloration, while aromatic isocyanates are preferred from the viewpoint of the strength of the resin.

Examples of polyols used in the synthesis of polyurethane-based resins include, for example, polyester diols, polyether diols, polyester polyols, polyacryl diols, polyesteramide diols, polycarbonate diols, or mixtures or copolymers of these polyols.

Examples of polyether diols include, for example, polyoxyethylene glycol, polyoxypropylene glycol, polytetramethylene ether glycol, polyoxypentamethylene glycol, copolymerized polyether glycols made from tetramethylene groups and 2,2-dimethylpropylene groups, copolymerized polyether glycols made from tetramethylene group and 3-methyltetramethylene groups, and mixtures thereof.

Examples of polyester diols include, for example, esterification reaction products of polycarboxylic acids and their acid anhydrides with alkyl polyols, and esterification reaction products obtained by polymerizing hydroxycarboxylic acids and/or lactones, i.e., internal ester thereof, using alkyl polyol as an initiator.

Examples of polycarboxylic acids include, for example, oxalic acid, malonic acid, succinic acid, methyl succinic acid, 2,3-dimethyl succinic acid, hexyl succinic acid, glutaric acid, 2,2-dimethyl glutaric acid, 3,3-dimethyl glutaric acid 3,3-diethylglutaric acid, adipic acid, pimelic acid, suberic acid, azelaic acid, sebacic acid, 1,2-cyclohexane dicarboxylic acid, 1,3-cyclohexane dicarboxylic acid, 1,4-cyclohexane dicarboxylic acid, and 1,1-cyclobutane dicarboxylic acid.

Examples of alkyl polyols that compose polyester polyols include ethylene glycol, 1,3-propanediol, propylene glycol, 2,3-butanediol, 1,4-butanediol, 2-ethylbutane-1,4-diol, 1,5-pentanediol, 1,6-hexanediol, 1,7-heptanediol, 1,8-octanediol, 1,9-nonanediol, 1,10-decanediol, 1,9-decanediol, 1,4-cyclohexanediol, 1,4-dimethylolcyclohexane, 2,2-diethylpropane-1,3-diol, 2,2-dimethylpropane-1,3-diol, 3-methylpentane-1,4-diol, 2,2-diethylbutane-1,3-diol, 4,5-nonanediol, diethylene glycol, triethylene glycol, dipropylene glycol, neopentyl glycol, glycerin, pentaerythritol, erythritol, sorbitol, mannitol, trimethylolpropane, and trimethylolethane.

Among these, from the viewpoint of the strength of the resin, polyester diols are preferable.

The polyester-based resin is a polymer synthesized by means of a polycondensation reaction of a polycarboxylic acid and a polyhydric alcohol, and various raw materials may be used. The type of the polyester-based resin may be any one of a saturated homopolyester resin (without unsaturated bond(s) on a polyester main chain), a saturated copolymer polyester resin, an alkyd resin, and an unsaturated polyester resin (with unsaturated bond(s) on a polyester main chain), but from the viewpoint of excellent low temperature heat sealability and blocking resistance, is preferably a saturated copolymer polyester resin.

Examples of the polycarboxylic acid to be polycondensated include oxalic acid, malonic acid, succinic acid, glutaric acid, adipic acid, pimelic acid, phthalic acid, and citric acid, for example.

Examples of the polyhydric alcohol to be polycondensated include ethylene glycol, propanediol, butanediol, and glycerin, for example.

These may be used alone or in a combination of two or more. Examples of the polyester-based resin include a resin formed of one polycarboxylic acid (e.g., phthalic acid, etc.) and two polyhydric alcohols (e.g., ethylene glycol and butanediol, etc.), for example.

The acrylic resin is a polymer containing as a monomer component an ethyleny unsaturated monomer having at least one carboxyl group or carboxylic acid ester group, and may be either a homopolymer of an ethyleny unsaturated monomer having at least one carboxyl group or carboxylic acid ester group, or a copolymer of such a monomer and another monomer copolymerizable with that monomer. Moreover, the acrylic resin may be an alkali metal salt, amine salt, or ammonium salt of carboxyl group (carboxylic acid) of the aforementioned homopolymer or the aforementioned copolymer.

Examples of the ethyleny unsaturated monomer having a carboxyl group or carboxylic acid ester group include methacrylic acid, acrylic acid, methacrylic acid ester, and acrylic acid ester, for example.

When the acrylic resin is a copolymer, the aforementioned "another monomer" may be ethylene; an aromatic vinyl monomer such as styrene, $\alpha$-methylstyrene (vinyl toluene), chloro styrene and the like; cyano group containing an ethyleny unsaturated monomer such as acrylonitrile, methylacrylonitrile and the like; an acrylamide based monomer such as acrylamide, N-methylolmethacrylamide, N-butoxymethylacrylamide and the like, etc.

As specific examples of the case that the acrylic resin is a copolymer, methacrylic acid ester-acrylic acid ester copolymer, acrylic acid ester-acrylic acid ester copolymer, ethylene-acrylic acid copolymer (EAA), ethylene-methacrylic acid copolymer (EMAA), ethylene-acrylic acid ester copolymer, styrene-acrylic acid copolymer, styrene-acrylic acid ester copolymer, etc. may be used.

By appropriately varying the types and ratio of monomers to be copolymerized, it is possible to adjust the glass-transition temperature of the acrylic resin.

When the acrylic resin is a copolymer, the ratio of structural units having an acryl structure is preferably 20% or more of the copolymer as a whole.

Vinyl acetate-based copolymers are copolymers of vinyl acetate and at least one or more monomers that are copolymerizable with vinyl acetate.

Examples of monomers that are copolymerizable with vinyl acetate include ethylene, alkyl (meth)acrylates such as n-butyl (meth)acrylate and 2-ethylhexyl (meth)acrylate, and hydroxyl group-containing (meth)acrylate such as 2-hydroxyethyl (meth)acrylate, and acrylic acid.

Specific examples of vinyl acetate-based copolymers include, for example, ethylene vinyl acetate copolymers.

In a vinyl acetate-based copolymer, the ratio of structural units having a vinyl acetate structure is preferably 20% or more of the copolymer as a whole.

In addition, a filler may also be added to the above adhesive resin. The filler that can be added may be an inorganic filler such as calcium carbonate, fluorine resin, silicone, silica, glass beads, metal oxide such as titania, alumina, magnesia, etc. and the like, or an organic filler such as various granular polymers, e.g., nylon, polyethylene (PE), polystyrene (PS), crosslinked copolymers of polystyrene, polypropylene (PP), polyester, acrylic resin (polymethyl methacrylate, crosslinked copolymer of polymethyl methacrylate, etc.), plastic of urethane, etc., and the like.

These may be used alone or in a combination of two or more.

As the filler, organic fillers including at least one selected from the group consisting of polymethyl methacrylate, cross-linked polymers thereof, and polystyrene cross-linked polymers are preferred because they do not easily sediment and separate in a coating solution of an adhesive resin, they are stable in the form of an emulsion, and has heat resistance during heat sealing and gloss after coated.

The amount of the filler per 100 parts by mass of the adhesive resin is preferably 0.5 parts by mass or more, more preferably 2 parts by mass or more, and even more preferably 3 parts by mass or more. If the content of the filler is less than 0.5 part by mass, there is a probability that blocking occurs under an atmosphere at a high temperature (40 °C) and a high humidity (90% RH) that is equivalent to the case of being shipped in summer or in subtropical regions or the low-temperature heat sealability is deteriorated. The upper limit is not particularly set, but 50 parts by mass or less is preferred, 30 parts by mass or less is more preferred, and 15 parts by mass or less is even more preferred. If the amount exceeds 50 parts by mass, in the case where printing is provided between the adhesive resin layer and the laminate, outlines of the printing tend to blur, resulting in reduced visibility and transparency.

The preferred method of laminating the adhesive resin is to apply the laminate and dry it. Furthermore, it is preferable from an environmental viewpoint that the adhesive resin is applied in the form of a water emulsion in which polymer particles are dispersed in water.

In the present embodiment, a water emulsion may be prepared simultaneously with polymerization of the adhesive resin. In this case, the method for preparing the water emulsion is not specifically limited, and may be polymerization methods such as emulsion polymerization, suspension polymerization, bulk polymerization, mini-emulsion polymerization, and the like. In particular, from the viewpoint of stably manufacturing an emulsion having excellent dispersion stability of an average particle diameter of 10 nm to 1 $\mu$m, emulsion polymerization is preferably used.

The thickness of the adhesive resin layer is preferably 1 $\mu$m or more, more preferably 3 $\mu$m or more, and even more preferably 6 $\mu$m or more from the viewpoint of heat sealability, elongation, and the piercing of the laminate by a packaged content. The upper limit is not particularly set, but 50 $\mu$m or less is preferred, 30 $\mu$m or less is more preferred, and 15 $\mu$m or less is even more preferred. When the thickness is 1 $\mu$m or more, a sufficient heat sealability and good elongation are imparted. If the thickness is more than 50 μm, packaged contents are becomes more likely to penetrate through the laminate.

Furthermore, the above adhesive resin may also be included in the halogenated vinyl polymer layer of the laminate. When the adhesive resin and a water dispersion of halogenated vinyl polymer particles are appropriately mixed and used, the adhesive resin can act as a plasticizer to lower the crystal melting point of the halogenated vinyl polymer to thereby provide low-temperature heat sealability. However, if the blending amount is too high, the barrier properties that are characteristic to the halogenated vinyl polymer are lost. Therefore, the resin solid content of the adhesive resin per 100% by mass of resin solid of the halogenated polymer is preferably 50% by mass or less, more preferably 40% by mass or less, even more preferably 20% by mass or less, and most preferably 10% by mass or less. The lower limit is not particularly set, but 0.001% by mass or more is preferred, 0.01% by mass or more is more preferred, 0.1% by mass or more is even more preferred, and 1% by mass or more is most preferred. If the adhesive resin is added in an amount of more than 50% by mass, the barrier properties of the halogenated vinyl polymer tend to be lost, or if the amount is less than 0.001% by mass, excellent low-temperature heat-sealability tends not to be achieved.

Moreover, the laminate of the present embodiment, when used for industrial materials, can also be expected to have advantageous effects, such as prevention of decomposition or degradation through prevention of entry of oxygen and moisture, as well as prevention of leakage of VOCs and other substances, and flavor barrier property.

EXAMPLES

The following provides a more specific description of the present disclosure through examples. However, the present disclosure is not limited to these examples. Note that when only "parts" or "%" are used in examples and comparative examples, it represents "parts by mass" or "% by mass" unless clearly indicated otherwise.

The properties of the examples and the comparative examples were measured or evaluated by the following methods.

<Measurement and evaluation methods>

(1) Weight average molecular weight (Mw) of halogenated vinyl polymer

The weight average molecular weight (Mw) of the halogenated vinyl polymers obtained in the examples and the comparative examples were analyzed with gel permeation chromatography (GPC).

A measurement was carried out on a sample prepared by dissolving 0.03 g of dried halogenated vinyl polymer into 10 mL of tetrahydrofuran under the following conditions.

<Measurement conditions for GPC>

(Data processing): EcoSEC-WS developed by Tosoh Corporation
(Apparatus): HLC-8320GPC EcoSEC manufactured by Tosoh Corporation
(Columns): one TSKgel SuperHZM-M (4.6 mm I.D. × 15 cm) column manufactured by Tosoh Corporation and one TSKgel SuperHZ2000 (4.6 mm I.D. × 15 cm) column manufactured by Tosoh Corporation
(Oven temperature): 40 °C
(Eluent): tetrahydrofuran 0.35 mL/min
(Sample volume): 20 μL (1.0 mg/mL)
(Detector): RI
(Calibration curve): in terms of polystyrene (Pst)

(2) Average particle diameter of halogenated vinyl polymer particles in water dispersion

A water dispersion containing 0.1 to 1% by mass (in terms of dry solid content) of each of the halogenated vinyl polymers obtained in the examples and the comparative examples was prepared by dilution with pure water. Into a glass cell (Cent tube STS-2 manufactured by Maruemu Corporation), 5 to 9 cc of the water dispersion was dispensed. The average particle diameter (nm) of the halogenated vinyl polymer particles in the water dispersion was measured using a particle size analyzer (FPAR-1000 manufactured by Otsuka Electronics Co., Ltd.).

(3) pH of water dispersion of halogenated vinyl polymer

The pH of the water dispersion of the halogenated vinyl polymer particles prepared in (2) above was measured using pH METER HM-50G (manufactured by DKK-TOA Corporation). Before the measurement, calibration was carried out using a 0.05-mol/L standard solution of oxalic acid salt (pH 1.68), a 0.05-mol/L standard solution of phthalic acid salt (pH 4.01), and a 0.025-mol/L neutral standard solution of phosphoric acid salt (pH 6.86), which were kept at a constant temperature of 20 ± 1 °C. The pH of the water dispersion of the halogenated vinyl polymer particles kept at a constant temperature of 20 ± 1 °C was then measured.

(4) Thickness of halogenated vinyl polymer layer in laminate on paper support

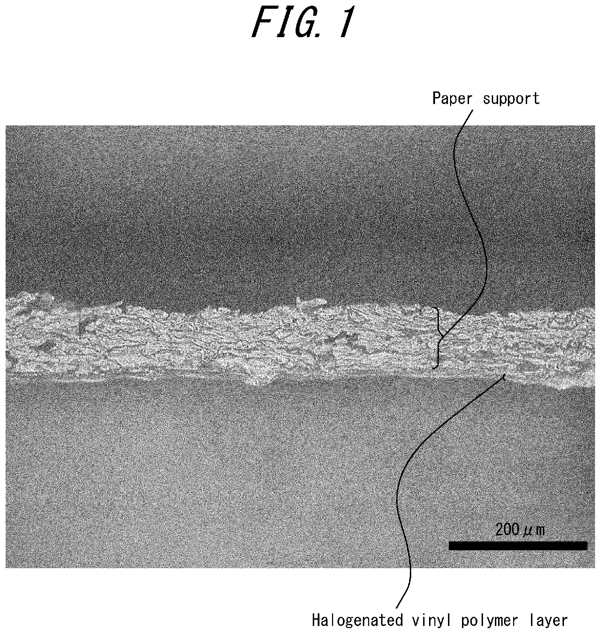

A cut piece was cut out from each of the laminates produced in the examples and the comparative examples using a large rotary microtome OSK 97LF506 (manufactured by Ogawa Seiki Co., Ltd.), and the cross section was observed under a microscope KH-7700 (manufactured by HIROX Co., Ltd.). The thickness of the halogenated vinyl polymer layer was measured at 30 locations which were spaced apart from each other by 100 $\mu$m from the center of the paper support coated with halogenated vinyl polymer, and the average of the thicknesses was determined to be used as the thickness of the halogenated vinyl polymer layer ($\mu$m).
Note that a microscopic image of an interface between the paper support and the halogenated vinyl polymer layer as illustrated in FIG. 1 was captured. In an measurement, the part of pulp fiber aggregates having voids was judged to be the paper support and the part constituting a continuous layer with no voids was judged to be the halogenated vinyl polymer layer. In cases where the interface between the paper support and the halogenated vinyl polymer layer was not clearly observed due to a collapse of the cross section or other reason, the thickness of the paper support was not sampled and the thickness was measured at the next point 100 $\mu$m spaced apart from that point.

(5) Content of halogenated vinyl polymer

Each of the laminates produced in the examples and the comparative examples was cut into a 5-cm square piece using a utility knife, and was heat-treated at 115 °C in a hot-air dryer for 30 minutes. The laminate sample were then allowed to stand for 30 minutes in an environment of 20 °C and 55% RH, and the mass of the laminate sample was measured using a precision balance capable of measuring to four decimal places (Measurement 1). A 140-mL glass bottle was filled with 100 mL of tetrahydrofuran, into which the laminate sample cut into 5 cm squares was immersed. An ultrasonic cleaner (part number: US CLEANER, model number: USK-1R) manufactured by Az One Corporation was filled with pure water, and the glass bottle containing 100 mL of tetrahydrofuran and the laminate sample was immersed in the pure water and subjected to ultrasonic cleaning treatment at a setting temperature of 25 °C for 5 minutes. Thereafter, 100 mL of clean tetrahydrofuran were charged into each of two 140-mL glass bottles, and stirring at 100 rpm was performed for 5 minutes using SA300 shaker manufactured by Yamato Scientific Co., Ltd. The laminate sample was then transferred to one of the glass bottles containing clean tetrahydrofuran, and stirring at 100 rpm was performed for another 5 minutes with SA300 shaker manufactured by Yamato Scientific Co., Ltd. The laminate sample was removed and both surfaces thereof were wiped several times with clean gauze impregnated with tetrahydrofuran. The sample was further heat-treated in a hot-air dryer at 115 °C for 30 minutes. The laminate sample that had been subjected to the heat treatment was removed and allowed to stand for 30 minutes in an environment of 20 °C and 55% RH. The mass was then measured using the precision balance capable of measuring to four decimal places (Measurement 2), and the content of the halogenated vinyl polymer was calculated using the following formula.

$$\text{Mass measured in Measurement 1 (g/5 cm}^2) - \text{Mass measured in Measurement 2 (g/5 cm}^2) \times 400 \ (\text{m}^2/25 \times 10^{-4} \ \text{m}^2)$$

(6) Coating efficiency of halogenated vinyl polymer layer

The coating efficiency of the halogenated vinyl polymer layer of each of the laminates produced in the examples and the comparative examples was calculated using the following formula.

$$\text{Coating efficiency } (m^3/g) = \text{thickness } (\mu m) \text{ of halogenated vinyl polymer layer on paper support determined in (4)} \times 10^{-6} / \text{content of halogenated polymer determined in (5) } (g/m^2)$$

(7) Moisture resistance

A circular sample with a diameter of 7 cm was cut out from each of the laminates produced in the examples and the comparative examples using a circular cutter. A moisture permeable cup (having a circular base of 6 cm in diameter, permeable area of 28.6 $cm^2$, aluminum surface treated with anodized vapor) was wiped with a gauze impregnated with tetrahydrofuran, dried, and then placed on a cup stand (made of cast brass) that was kept level. About 10 g of calcium chloride (manufactured by FUJIFILM Wako Pure Chemical Corporation) compliant to JIS K8125 as a moisture absorbent was measured out and placed in the moisture permeable cup. The test specimen cut out into 7 cm in diameter was placed on the upper edge of the moisture permeable cup such that the center of the specimen coincided with the center of the circular base of the cup. The guide (made of cast brass) was placed over the moisture permeable cup with being aligned with the groove in the cup stand. A ring (aluminum surface treated with an anodized vapor) was pressed onto the upper edge of the moisture permeable cup having the specimen placed thereon in line with the guide until it was brought into contact with the top edge of the cup, and a weight (made of cast brass) was placed on the ring. After the guide was removed by pulling it up vertically, the cup was heated to about 100 °C on a hot plate while being rotated, and a molten sealant (beeswax, white, mixture of pellet (manufactured by FUJIFILM Wako Pure Chemical Corporation) and paraffin mp 64 to 66 °C at a ratio of 6/4) was poured around the periphery of the cup to seal the edge of the test piece. After the sealant was allowed to stand until it solidified, the weight and cup stand were removed. The sealant adhering to the area other than the sealing portion was wiped off with gauze impregnated with tetrahydrofuran to obtain a test specimen. After the test specimen was allowed to stand in a constant temperature and constant humidity chamber at 20 °C and 55% RH for 1 hour or longer, the specimen was weighed using an electronic balance capable of weighing in the order of 0.001 mg. After weighing, the specimen was placed in a constant temperature and constant humidity chamber at 40 °C and 90% RH for 24 hours, removed, placed in a constant temperature and constant humidity chamber at 20 °C and 55% RH for at least 1 hour, and then weighed on an electronic balance capable of weighing in the order of 0.001 mg. The moisture resistance of the specimen was calculated using the following formula.

$$\text{Moisture resistance } (g/m^2 \cdot 24 \text{ hr}) = 240 \times \text{increase in mass of test specimen } (mg/24 \text{ hr}) \times 28.6 \ (cm^2)$$

(8) Dissociability

For each of the laminates produced in the examples and the comparative examples, a mixture of the laminate and water in a mass ratio of 3/100 was placed in a 2L-test pulper (manufactured by Kumagai Riki Kogyo Co., Ltd.) to cause dissociation of the paper support (pulp) at 122 rpm for 10 minutes.

The dissociability of the paper support (pulp) was evaluated by placing a pinch of the slurry after the pulper treatment in a 2-L glass test tube filled with water, shaking it thoroughly, and then visually observing the dissociability. Tests were conducted on three samples of the laminate for each of the examples and the comparative examples.

[Evaluation criteria]

◎: No residue of a few millimeters or greater and smaller than 1 cm was observed.
O: 1 to 6 residues of a few millimeters or greater and smaller than 1 cm were observed, but no residue of 1 cm or greater was not observed.
△: 7 or more residues of a few millimeters or greater and smaller than 1 cm were observed, but no residue of greater than 1 cm was observed.
×: Residues of a few millimeters or greater and smaller than 1 cm were observed, as well as residues of greater than 1 cm.

(9) Heat seal strength

Each of the laminates produced in the examples and the comparative examples was cut into pieces of 150 mm in length and 15 mm in width using a utility knife. The coated surfaces of the halogenated vinyl polymer were heat-sealed together, and a tensile test between the coated surfaces of the halogenated vinyl polymer was conducted using a heat gradient tester HG-100 (manufactured by Toyo Seiki Seisaku-sho, Ltd.) under the following settings.

Samples that did not adhere even after heat-sealing were noted as "not measurable," and samples in which the paper supports were broken during the tensile test due to strong adhesion were noted as "broken".

<Heat seal conditions>

Temperature: 120 °C, 130 °C, 140 °C, 150 °C, or 160 °C
Pressure: 1 kg/f/cm$^2$
Sealing time: 2 seconds

<Tensile test conditions>

Both ends of a sample were firmly secured with a gripping tool, and a 90 ° T-peel test was performed using Autograph AGS-50NX (manufactured by Shimadzu Corporation) in a constant temperature and constant humidity chamber at 20 °C and 55% RH under the following conditions, and the maximum point test force (N) was determined to be used as the heat seal strength.

Tensile speed: 100 mm/min
Chuck separation distance: 100 mm

(10) Degree of yellowing

The laminates produced in the examples and the comparative examples and high-quality paper (basis weight: 70 g/m$^2$) on which a halogenated vinyl polymer was not coated were placed in a hot-air circulating dryer at 60 °C for 3 days. A spectrophotometer CM-5 (manufactured by Konica Minolta, Inc.) was set up, and zero calibration and white calibration were carried out. Then, a sample taken out of the hot air circulation dryer was set on the target mask, and the YI value was measured by reflectance measurement. The degree of yellowing was evaluated using the uncoated high-quality paper as a reference, and was graded on a three-point scale according to the following criteria. Tests were conducted on three samples of each of the laminates the examples and the comparative examples.

[Evaluation criteria]

◎: the YI value was less than 1, and the whiteness was almost equal to that of the uncoated high-quality paper, which was acceptable.
O: The YI value was 1 or more and less than 2, and the specimen was slight yellowish compared to the uncoated high-quality paper, which was however acceptable.
Δ: The YI value was 2 or more and less than 3, and the specimen was yellowish compared to the uncoated high-quality paper, which was however acceptable in practical use.
×: The YI value was 3 or more, and the specimen was significantly yellowish compared to the uncoated high-quality paper, which was not desirable in practical use.

(11) Measurement of crystal melting point

Crystallization of a paper support coated with a halogenated vinyl polymer (coated paper) was sufficiently progressed with a hot air dryer at 60 °C for 24 hours, and the coated halogenated vinyl polymer was removed using tweezers or the like from the coated surface and 5 mg was weighed out using Tzero Hermetic Pan. The crystal melting point was measured using DSC (Q2000, manufactured by TA Inc.) and RCS cooling system (manufactured by TA Inc.).

(Standby temperature): 40 °C

(Temperature increase rate): 10 °C/min
(Increased temperature): 200 °C

The data obtained were analyzed using Universal Analysis. Analyza and Integrate Peak were selected on a graph in which the Y-axis represented the heat flow and the X-axis represented the temperature (°C), and the type of the baseline was selected. A cross cursor was used to select from 45 °C to 180 °C, and the peak temperature of the endotherm obtained was used as the crystal melting point (°C).

When multiple endothermic peaks were identified on the graph by Universal Analysis, the temperatures of all endothermic peaks were measured to determine the crystal melting point.

(12) Pure water contact angle of paper support with

Measurements were carried out using a portable pure water contact angle meter PG-X plus (manufactured by MATSUBO Corporation). The main body of the instrument was set on a paper support before a halogenated vinyl polymer was applied and it confirmed to be level on the video screen. A static contact angle was measured in static mode using pure water as the standard liquid. Measurements were carried out on 10 drops of water, and the average value was determined to be used as the pure water contact angle (degrees).

Drop volume: 4 μL
Holding time after dropping: 2 seconds

If the droplet permeated and could not be held for 2 seconds after it was dropped, the contact angle was determined to be less than 20 °.

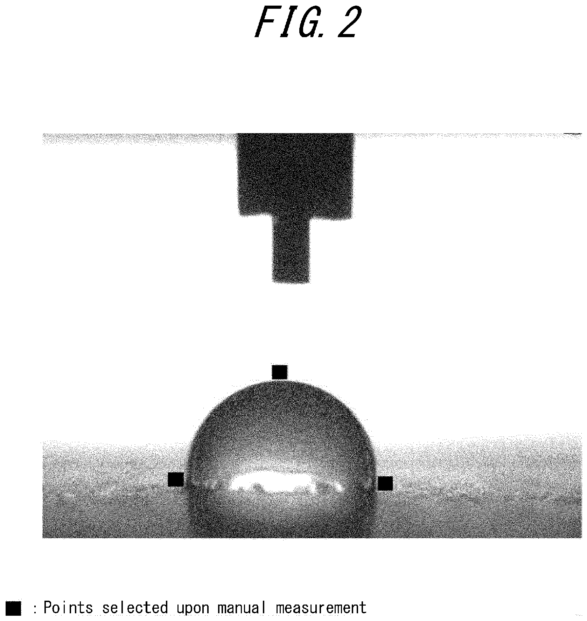

Image processing was used to adjust the image contrast and the brightness, and three points, i.e., the drop lines at respective ends of the drop and the sample surface, and the apex of the drop, as illustrated in FIG. 2, were selected and manual measurements of the contact angle were carried out.

[Example 1]

(Production of water dispersion of halogenated vinyl polymer)

A pressure-resistant reactor provided with a glass lining was charged with 80 parts of pure water, 0.007 parts of sodium hydroxymethanesulfinate dihydrate (Rongalit), and 0.18 parts of sodium alkyl sulfonate, with the later-described feedstock monomer mixture taken to be 100 parts. The contents were subjected to degassing under stirring and were then held at a temperature of 45 °C. In a separate vessel, 100 parts of a feedstock monomer mixture of vinylidene chloride (VDC), methyl acrylate (MA), and acrylic acid (AA) was prepared so that the composition ratio (VDC/MA/AA) was 90.5/9.2/0.3. Into the above-described pressure-resistant reactor, 20 parts of 100 parts of the feedstock monomer mixture were added in batch, and polymerization was performed until the internal pressure dropped. Subsequently, remaining 80 parts of the monomer mixture were pressure-fed in batch. At the same time, 0.6 parts of sodium alkyl sulfonate as an emulsifier were added in batch, and an initiator solution in which 0.0023 parts of T-butyl hydroperoxide as an initiator was dissolved in 1.9 parts of pure water, and a reducing agent solution in which 0.0014 parts of Rongalit was dissolved in 1.6 parts of pure water were continuously pressure-fed in constant quantities. During the above, the contents were held at 45 °C under stirring, and the reaction was caused to proceed until the internal pressure sufficiently dropped to obtain a vinylidene chloride-based copolymerization resin latex. The polymerization yield was 99.8%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 176 nm and 280,000, respectively.

After unreacted monomers were removed from the obtained latex by steam stripping, the pH was adjusted to 3.0 using a 5% ammonia water solution. The vinylidene chloride-based copolymerization resin was then adjusted with pure water to 40 to 50% in terms of solid content, and the surface tension of the latex at 20 °C was adjusted to 42 (mN/m) by adding 1.1 parts of a 30% solution of sodium lauryl sulfonate per 100 parts of the vinylidene chloride-based copolymerization resin in the latex.

(Preparation of laminate)

The water dispersion of the halogenated vinyl polymer (vinylidene chloride-based copolymerization resin latex) obtained as described above was applied on commercially available high-quality paper having a pure water contact angle of 92 ° and a basis weight of 70 g/m² using a wire bar so that the content of halogenated vinyl polymer (vinylidene chloride-based copolymerization resin) after being dried was 20 g/m². After being dried in a hot-air circulating dryer at 100 °C for 2 minutes, the resultant was aged in a hot-air dryer at 40 °C for 24 hours.

The results of measurements and evaluations of the physical properties are summarized in Table 1.

[Example 2]

A laminate was prepared in the manner similar to Example 1, except that the pH of the vinylidene chloride-based copolymerization resin latex was adjusted to 4.0 by using a 5% ammonia water.
The results of measurements and evaluations of the physical properties are summarized in Table 1.

[Example 3]

A laminate was prepared in the manner similar to Example 1, except that the pH of the vinylidene chloride-based copolymerization resin latex was adjusted to 2.0 by using a 5% ammonia water.
The results of measurements and evaluations of the physical properties are summarized in Table 1.

[Example 4]

(Production of water dispersion of halogenated vinyl polymer)

A pressure-resistant reactor provided with a glass lining was charged with 100 parts of pure water, 0.09 parts of sodium persulfate, and 0.15 parts of sodium alkyl sulfonate, with the later-described feedstock monomer mixture taken to be 100 parts. The contents were subjected to degassing under stirring and were then held at a temperature of 55 °C. In a separate vessel, 100 parts of a feedstock monomer mixture of vinylidene chloride (VDC), methacrylonitrile (MAN), methyl methacrylate (MMA), and acrylic acid (AA) was prepared so that the composition ratio (VDC/MAN/MMA/AA) was 91.0/4.0/4.0/1.0. Into the above-described pressure-resistant reactor, 10 parts of 100 parts of the feedstock monomer mixture were added in batch, and polymerization was performed until the internal pressure dropped. Subsequently, remaining 90 parts of the monomer mixture were continuously pressure-fed in constant quantities over 12 hours. At the same time, 1.0 part of sodium alkyl sulfonate as an emulsifier was continuously pressure-fed in constant quantities over 10 hours. During the above, the contents were held at 55 °C under stirring, and the reaction was caused to proceed until the internal pressure sufficiently dropped. The polymerization yield was 99.9%. Since the polymerization yield was almost 100%, the copolymer composition is considered to be almost equal to the charging ratio.
The average particle diameter and the weight average molecular weight (Mw) of vinylidene chloride-based copolymerization resin particles in the resultant vinylidene chloride-based copolymerization resin latex were 142 nm and 100,000, respectively.
The surface tension of the latex at 20 °C was adjusted to 42 mN/m by adding a 15% water solution of sodium alkyl sulfonate.
After unreacted monomers were removed from the obtained latex by steam stripping, the latex was dialyzed for 12 hours using a dialysis membrane which had a fractionation molecular weight of 10,000 and was made of a cellulose material to thereby adjust an electrical resistivity to 3000 Ω·m at 25 °C. The pH was then adjusted to 4.0 using a 5% ammonia water solution, and the vinylidene chloride-based copolymerization resin was then adjusted with pure water to 40 to 50% in terms of solid content.

(Preparation of laminate)

A laminate was produced in the same way as in Example 1 using the resultant water dispersion of the halogenated vinyl polymer (vinylidene chloride-based copolymerization resin latex).
The results of measurements and evaluations of the physical properties are summarized in Table 1.

[Example 5]

(Production of water dispersion of halogenated vinyl polymer)

A pressure-resistant reactor provided with a glass lining was charged with 100 parts of pure water, 0.05 parts of sodium persulfate, and 0.18 parts of sodium alkyl sulfonate, with the later-described feedstock monomer mixture taken to be 100 parts. The contents were subjected to degassing under stirring and were then held at a temperature of 55 °C. In a separate vessel, 100 parts of a feedstock monomer mixture of vinylidene chloride (VDC), methacrylonitrile (MAN), methyl methacrylate (MMA), and acrylic acid (AA) was prepared so that the composition ratio (VDC/MAN/MMA/AA) was 91.0/4.0/4.0/1.0. Into the above-described pressure-resistant reactor, 10 parts of 100 parts of the feedstock monomer mixture were added in batch, and polymerization was performed until the internal pressure dropped. Subsequently, remaining 90 parts of the monomer mixture were continuously pressure-fed in constant quantities over 12 hours. At the same time, 1.0 part of sodium alkyl sulfonate as an emulsifier was continuously pressure-fed in constant quantities over 10 hours. During the above, the contents were held at 55 °C under stirring, and the reaction was caused to proceed until the internal pressure sufficiently dropped. The polymerization yield was 99.9%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 125 nm and 200,000, respectively.

The surface tension of the latex at 20 °C was adjusted to 42 mN/m by adding a 15% water solution of sodium alkyl sulfonate.

After unreacted monomers were removed from the obtained latex by steam stripping, the latex was dialyzed for 12 hours using a dialysis membrane which had a fractionation molecular weight of 10,000 and was made of a cellulose material to thereby adjust an electrical resistivity to 3000 $\Omega \cdot m$ at 25 °C. The pH was then adjusted to 4.0 using a 5% ammonia water solution, and the vinylidene chloride-based copolymerization resin was then adjusted with pure water to 40 to 50% in terms of solid content.

(Preparation of laminate)

A laminate was produced in the same way as in Example 1 using the resultant water dispersion of the halogenated vinyl polymer (vinylidene chloride-based copolymerization resin latex).

The results of measurements and evaluations of the physical properties are summarized in Table 1.

[Example 6]

(Production of water dispersion of halogenated vinyl polymer)

A pressure-resistant reactor provided with a glass lining was charged with 100 parts of pure water, 0.09 parts of sodium persulfate, and 0.18 parts of sodium alkyl sulfonate, with the later-described feedstock monomer mixture taken to be 100 parts. The contents were subjected to degassing under stirring and were then held at a temperature of 55 °C. In a separate vessel, 100 parts of a feedstock monomer mixture of vinylidene chloride (VDC), methacrylonitrile (MAN), methyl methacrylate (MMA), and acrylic acid (AA) was prepared so that the composition ratio (VDC/MAN/MMA/AA) was 91.0/4.0/4.0/1.0. Into the above-described pressure-resistant reactor, 10 parts of 100 parts of the feedstock monomer mixture were added in batch, and polymerization was performed until the internal pressure dropped. Subsequently, remaining 90 parts of the monomer mixture were continuously pressure-fed in constant quantities over 12 hours. At the same time, 1.0 part of sodium alkyl sulfonate as an emulsifier was continuously pressure-fed in constant quantities over 10 hours. During the above, the contents were held at 55 °C under stirring, and the reaction was caused to proceed until the internal pressure sufficiently dropped. The polymerization yield was 99.9%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 123 nm and 100,000, respectively.

The surface tension of the latex at 20 °C was adjusted to 42 mN/m by adding a 15% water solution of sodium alkyl sulfonate.

After unreacted monomers were removed from the obtained latex by steam stripping, the latex was dialyzed for 12 hours using a dialysis membrane which had a fractionation molecular weight of 10,000 and was made of a cellulose material to thereby adjust an electrical resistivity to 3000 $\Omega \cdot m$ at 25 °C. The pH was then adjusted to 4.0 using a 5% ammonia water solution, and the vinylidene chloride-based copolymerization resin was then adjusted with pure water to 40 to 50% in terms of solid content.

(Preparation of laminate)

A laminate was produced in the same way as in Example 1 using the resultant water dispersion of the halogenated vinyl polymer (vinylidene chloride-based copolymerization resin latex).

The results of measurements and evaluations of the physical properties are summarized in Table 1.

[Example 7]

(Production of water dispersion of halogenated vinyl polymer)

A pressure-resistant reactor provided with a glass lining was charged with 66.0 parts of pure water, 0.0009 parts of Rongalit, and 0.21 parts of sodium alkylbenzenesulfonate, with the later-described feedstock monomer mixture taken to be 100 parts. The contents were subjected to degassing under stirring and were then held at a temperature of 45 °C. In a separate vessel, 90 parts of a feedstock monomer mixture (1) of vinylidene chloride (VDC), methyl methacrylate (MMA), acrylonitrile (AN), and 2-hydroxyethyl acrylate (HEA) was prepared so that the composition ratio (VDC/MMA/AN/HEA) was 81.27/6.12/0.99/1.62. In addition, 10 parts of a feedstock monomer mixture (2) of vinylidene chloride (VDC), acrylonitrile (AN), methyl acrylate (MA), and 2-hydroxyethyl acrylate (HEA) was prepared so that the composition ratio (VDC/AN/MA/HEA) was 8.6/0.8/0.4/0.2. Into the above-described pressure-resistant reactor, 9 parts of 100 parts of the feedstock monomer mixture (1) was added in batch, and polymerization was performed until the internal pressure dropped. Subsequently, 81 parts of the monomer mixture (1) was continuously pressure-fed in constant quantities. At the same time, an initiator solution in which 0.012 parts of t-butyl hydroperoxide as an initiator was dissolved in 4.92 parts of pure water, a reducing agent solution in which 0.023 parts of Rongalit as a reducing agent was dissolved in 4.97 parts of pure water, and an emulsifier solution in which 0.36 parts of sodium alkylbenzenesulfonate as an emulsifier was dissolved in 8.36 parts pure water were continuously pressure-fed in constant quantities. During the above, the contents were held at 45 °C under stirring, and the reaction was caused to proceed until the internal pressure sufficiently dropped. Thereafter, 10 parts of the monomer mixture (2) was continuously pressure-fed in constant quantities together with an initiator solution, a reducing agent solution, and an emulsifier solution similar to those in (1). During the above, the contents were held at 45 °C under stirring, and the reaction was caused to proceed until the internal pressure sufficiently dropped. The polymerization yield was 99.7%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 150 nm and 140,000, respectively.

After unreacted monomers were removed from the obtained latex by steam stripping, the pH was adjusted to 3.0 using a 5% ammonia water solution. The vinylidene chloride-based copolymerization resin was then adjusted with pure water to 40 to 50% in terms of solid content, and the surface tension of the latex at 20 °C was adjusted to 42 mN/m by adding a 15% solution of sodium alkyl sulfonate.

(Preparation of laminate)

A laminate was produced in the same way as in Example 1 using the resultant water dispersion of the halogenated vinyl polymer (vinylidene chloride-based copolymerization resin latex).

The results of measurements and evaluations of the physical properties are summarized in Table 1.

[Example 8]

(Production of water dispersion of halogenated vinyl polymer)

A pressure-resistant reactor provided with a glass lining was charged with 67 parts of pure water, 0.0066 parts of sodium D-araboascorbate, and 0.29 parts of sodium alkyl sulfonate, with the later-described feedstock monomer mixture taken to be 100 parts. The contents were subjected to degassing under stirring and were then held at a temperature of 45 °C. In a separate vessel, 100 parts of a feedstock monomer mixture of vinylidene chloride (VDC), methacrylonitrile (MAN), methyl methacrylate (MMA), and acrylic acid (AA) was prepared so that the composition ratio (VDC/MAN/MMA/AA) was 91.5/5.2/2.4/0.9. Into the above-described pressure-resistant reactor, 9 parts of 100 parts of the feedstock monomer mixture were added in batch, and polymerization was performed until the internal pressure dropped. Subsequently, remaining 91 parts of the monomer mixture were continuously pressure-fed in constant quantities. At the same time, an initiator solution in which 0.033 parts of t-butyl hydroperoxide as an initiator was dissolved in 6.00 parts of pure water, a reducing agent solution in which 0.127 parts of sodium D-araboascorbate as a reducing agent was dissolved in 6.0 parts of pure water, and an emulsifier solution in which 1.0 part of sodium alkyl diphenyl ether disulfonate as an emulsifier was dissolved in 10.0 parts of pure water were continuously pressure-fed in constant quantities. During the above, the contents were held at 45 °C under stirring, and the reaction was caused to proceed until the internal pressure sufficiently dropped. The polymerization yield was 99.9%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 121 nm and 120,000, respectively.

After unreacted monomers were removed from the obtained latex by steam stripping, the pH was adjusted to 3.0 using a 5% ammonia water solution. The vinylidene chloride-based copolymerization resin was then adjusted with pure water to 40 to 50% in terms of solid content, and the surface tension of the latex at 20 °C was adjusted to 42 mN/m by adding a 15% solution of sodium alkyl sulfonate.

(Preparation of laminate)

A laminate was produced in the same way as in Example 1 using the resultant water dispersion of the halogenated vinyl polymer (vinylidene chloride-based copolymerization resin latex).

The results of measurements and evaluations of the physical properties are summarized in Table 1.

[Example 9]

(Production of water dispersion of halogenated vinyl polymer)

A pressure-resistant reactor provided with a glass lining was charged with 100 parts of pure water, 0.09 parts of sodium persulfate, and 0.19 parts of sodium alkyl sulfonate, with the later-described feedstock monomer mixture taken to be 100 parts. The contents were subjected to degassing under stirring and were then held at a temperature of 55 °C. In a separate vessel, 100 parts of a feedstock monomer mixture of vinylidene chloride (VDC), methacrylonitrile (MAN), methyl methacrylate (MMA), and acrylic acid (AA) was prepared so that the composition ratio (VDC/MAN/MMA/AA) was 91.0/4.0/4.0/1.0. Into the above-described pressure-resistant reactor, 10 parts of 100 parts of the feedstock monomer mixture were added in batch, and polymerization was performed until the internal pressure dropped. Subsequently, remaining 90 parts of the monomer mixture were continuously pressure-fed in constant quantities over 12 hours. At the same time, 1.0 part of sodium alkyl sulfonate as an emulsifier was continuously pressure-fed in constant quantities over 10 hours. During the above, the contents were held at 55 °C under stirring, and the reaction was caused to proceed until the internal pressure sufficiently dropped. The polymerization yield was 99.9%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 122 nm and 100,000, respectively.

The surface tension of the latex at 20 °C was adjusted to 42 mN/m by adding a 15% water solution of sodium alkyl sulfonate.

After unreacted monomers were removed from the obtained latex by steam stripping, the latex was dialyzed for 12 hours using a dialysis membrane which had a fractionation molecular weight of 10,000 and was made of a cellulose material to thereby adjust an electrical resistivity to 3000 $\Omega \cdot m$ at 25 °C. The pH was then adjusted to 4.0 using a 5% ammonia water solution, and the vinylidene chloride-based copolymerization resin was then adjusted with pure water to 40 to 50% in terms of solid content.

(Preparation of laminate)

A laminate was produced in the same way as in Example 1 using the resultant water dispersion of the halogenated vinyl polymer (vinylidene chloride-based copolymerization resin latex).

The results of measurements and evaluations of the physical properties are summarized in Table 1.

[Example 10]

(Production of water dispersion of halogenated vinyl polymer)

A pressure-resistant reactor provided with a glass lining was charged with 100 parts of pure water, 0.09 parts of sodium persulfate, and 0.20 parts of sodium alkyl sulfonate, with the later-described feedstock monomer mixture taken to be 100 parts. The contents were subjected to degassing under stirring and were then held at a temperature of 55 °C. In a separate vessel, 100 parts of a feedstock monomer mixture of vinylidene chloride (VDC), methacrylonitrile (MAN), methyl methacrylate (MMA), and acrylic acid (AA) was prepared so that the composition ratio (VDC/MAN/MMA/AA) was 91.0/4.0/4.0/1.0. Into the above-described pressure-resistant reactor, 10 parts of 100 parts of the feedstock monomer mixture were added in batch, and polymerization was performed until the internal pressure dropped. Subsequently, remaining 90 parts of the monomer mixture were continuously pressure-fed in constant quantities over 12 hours. At the same time, 1.0 part of sodium alkyl sulfonate as an emulsifier was continuously pressure-fed in constant quantities over 10 hours. During the above, the contents were held at 55 °C under stirring, and the reaction was caused to proceed until the internal pressure sufficiently dropped. The polymerization yield was 99.9%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 121 nm and 100,000, respectively.

The surface tension of the latex at 20 °C was adjusted to 42 mN/m by adding a 15% water solution of sodium alkyl sulfonate.

After unreacted monomers were removed from the obtained latex by steam stripping, the latex was dialyzed for 12 hours using a dialysis membrane which had a fractionation molecular weight of 10,000 and was made of a cellulose material to thereby adjust an electrical resistivity to 3000 $\Omega \cdot$m at 25 °C. The pH was then adjusted to 4.0 using a 5% ammonia water solution, and the vinylidene chloride-based copolymerization resin was then adjusted with pure water to 40 to 50% in terms of solid content.

(Preparation of laminate)

A laminate was produced in the same way as in Example 1 using the resultant water dispersion of the halogenated vinyl polymer (vinylidene chloride-based copolymerization resin latex).

The results of measurements and evaluations of the physical properties are summarized in Table 1.

[Example 11]

(Production of water dispersion of halogenated vinyl polymer)

A pressure-resistant reactor provided with a glass lining was charged with 80 parts of pure water, 0.007 parts of sodium hydroxymethanesulfinate dihydrate (Rongalit), and 0.18 parts of sodium alkyl sulfonate, with the later-described feedstock monomer mixture taken to be 100 parts. The contents were subjected to degassing under stirring and were then held at a temperature of 45 °C. In a separate vessel, 100 parts of a feedstock monomer mixture of vinylidene chloride (VDC), methyl acrylate (MA), and acrylic acid (AA) was prepared so that the composition ratio (VDC/MA/AA) was 80.5/19.2/0.3. Into the above-described pressure-resistant reactor, 20 parts of 100 parts of the feedstock monomer mixture were added in batch, and polymerization was performed until the internal pressure dropped. Subsequently, remaining 80 parts of the monomer mixture were pressure-fed in batch. At the same time, 0.6 parts of sodium alkyl sulfonate as an emulsifier were added in batch, and an initiator solution in which 0.0023 parts of T-butyl hydroperoxide as an initiator was dissolved in 1.9 parts of pure water, and a reducing agent solution in which 0.0014 parts of Rongalit was dissolved in 1.6 parts of pure water were continuously pressure-fed in constant quantities. During the above, the contents were held at 45 °C under stirring, and the reaction was caused to proceed until the internal pressure sufficiently dropped to obtain a vinylidene chloride-based copolymerization resin latex. The polymerization yield was 99.8%. Since the polymerization yield was almost 100%, the copolymer composition is considered to be almost equal to the charging ratio.

The average particle diameter of vinylidene chloride-based copolymerization resin particles in the resultant vinylidene chloride-based copolymerization resin latex was 175 nm, and the weight average molecular weight (Mw) was 280,000.

After unreacted monomers were removed from the obtained latex by steam stripping, the pH was adjusted to 3.0 using a 5% ammonia water solution. The vinylidene chloride-based copolymerization resin was then adjusted with pure water to 40 to 50% in terms of solid content, and the surface tension of the latex at 20 °C was adjusted to 42 (mN/m) by adding 1.1 parts of a 30% solution of sodium lauryl sulfonate per 100 parts of the vinylidene chloride-based copolymerization resin in the latex.

(Preparation of laminate)

The water dispersion of the halogenated vinyl polymer (vinylidene chloride-based copolymerization resin latex) obtained as described above was applied on commercially available high-quality paper having a pure water contact angle of 92 ° and a basis weight of 70 g/m$^2$ using a wire bar so that the content of halogenated vinyl polymer (vinylidene chloride-based copolymerization resin) after being dried was 20 g/m$^2$. After being dried in a hot-air circulating dryer at 100 °C for 2 minutes, the resultant was aged in a hot-air dryer at 40 °C for 24 hours.

The results of measurements and evaluations of the physical properties are summarized in Table 1.

[Example 12]

(Production of water dispersion of halogenated vinyl polymer)

A pressure-resistant reactor provided with a glass lining was charged with 80 parts of pure water, 0.007 parts of sodium hydroxymethanesulfinate dihydrate (Rongalit), and 0.18 parts of sodium alkyl sulfonate, with the later-described feedstock monomer mixture taken to be 100 parts. The contents were subjected to degassing under stirring and were then held at a temperature of 45 °C. In a separate vessel, 100 parts of a feedstock monomer mixture of vinylidene chloride (VDC), methyl acrylate (MA), and acrylic acid (AA) was prepared so that the composition ratio (VDC/MA/AA) was 70.5/29.2/0.3. Into the above-described pressure-resistant reactor, 20 parts of 100 parts of the feedstock monomer mixture were added in batch, and polymerization was performed until the internal pressure dropped. Subsequently, remaining 80 parts of the monomer mixture were pressure-fed in batch. At the same time, 0.6 parts of sodium alkyl sulfonate as an emulsifier were added in batch, and an initiator solution in which 0.0023 parts of T-butyl hydroperoxide as an initiator was dissolved in 1.9 parts of pure water, and a reducing agent solution in which 0.0014 parts of Rongalit was dissolved in 1.6 parts of pure water were continuously pressure-fed in constant quantities. During the above, the contents were held at 45 °C under stirring, and the reaction was caused to proceed until the internal pressure sufficiently dropped to obtain a vinylidene chloride-based copolymerization resin latex. The polymerization yield was 99.8%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 176 nm and 280,000, respectively.

After unreacted monomers were removed from the obtained latex by steam stripping, the pH was adjusted to 3.0 using a 5% ammonia water solution. The vinylidene chloride-based copolymerization resin was then adjusted with pure water to 40 to 50% in terms of solid content, and the surface tension of the latex at 20 °C was adjusted to 42 (mN/m) by adding 1.1 parts of a 30% solution of sodium lauryl sulfonate per 100 parts of the vinylidene chloride-based copolymerization resin in the latex.

(Preparation of laminate)

The water dispersion of the halogenated vinyl polymer (vinylidene chloride-based copolymerization resin latex) obtained as described above was applied on commercially available high-quality paper having a pure water contact angle of 92 ° and a basis weight of 70 g/m$^2$ using a wire bar so that the content of halogenated vinyl polymer (vinylidene chloride-based copolymerization resin) after being dried was 20 g/m$^2$. After being dried in a hot-air circulating dryer at 100 °C for 2 minutes, the resultant was aged in a hot-air dryer at 40 °C for 24 hours.

The results of measurements and evaluations of the physical properties are summarized in Table 1.

[Example 13]

(Production of water dispersion of halogenated vinyl polymer)

A pressure-resistant reactor provided with a glass lining was charged with 80 parts of pure water, 0.007 parts of sodium hydroxymethanesulfinate dihydrate (Rongalit), and 0.18 parts of sodium alkyl sulfonate, with the later-described feedstock monomer mixture taken to be 100 parts. The contents were subjected to degassing under stirring and were then held at a temperature of 45 °C. In a separate vessel, 100 parts of a feedstock monomer mixture of vinylidene chloride (VDC), methyl acrylate (MA), and acrylic acid (AA) was prepared so that the composition ratio (VDC/MA/AA) was 69.0/30.7/0.3. Into the above-described pressure-resistant reactor, 20 parts of 100 parts of the feedstock monomer mixture were added in batch, and polymerization was performed until the internal pressure dropped. Subsequently, remaining 80 parts of the monomer mixture were pressure-fed in batch. At the same time, 0.6 parts of sodium alkyl sulfonate as an emulsifier were added in batch, and an initiator solution in which 0.0023 parts of T-butyl hydroperoxide as an initiator was dissolved in 1.9 parts of pure water, and a reducing agent solution in which 0.0014 parts of Rongalit was dissolved in 1.6 parts of pure water were continuously pressure-fed in constant quantities. During the above, the contents were held at 45 °C under stirring, and the reaction was caused to proceed until the internal pressure sufficiently dropped to obtain a vinylidene chloride-based copolymerization resin latex. The polymerization yield was 99.8%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 176 nm and 280,000, respectively.

After unreacted monomers were removed from the obtained latex by steam stripping, the pH was adjusted to 3.0 using a 5% ammonia water solution. The vinylidene chloride-based copolymerization resin was then adjusted with pure water to 40 to 50% in terms of solid content, and the surface tension of the latex at 20 °C was adjusted to 42 (mN/m) by adding 1.1 parts of a 30% solution of sodium lauryl sulfonate per 100 parts of the vinylidene chloride-based copolymerization resin in the latex.

(Preparation of laminate)

The water dispersion of the halogenated vinyl polymer (vinylidene chloride-based copolymerization resin latex) obtained as described above was applied on commercially available high-quality paper having a pure water contact angle of 92 ° and a basis weight of 70 g/m$^2$ using a wire bar so that the content of halogenated vinyl polymer (vinylidene chloride-based copolymerization resin) after being dried was 20 g/m$^2$. After being dried in a hot-air circulating dryer at 100 °C for 2 minutes, the resultant was aged in a hot-air dryer at 40 °C for 24 hours.

The results of measurements and evaluations of the physical properties are summarized in Table 1.

[Example 14]

A laminate was produced in the same way as in Example 1, except that high-quality paper with a pure water contact angle of 158 ° was used as the paper support.

The results of measurements and evaluations of the physical properties are summarized in Table 1.

[Example 15]

A laminate was produced in the same way as in Example 1, except that high-quality paper with a pure water contact angle of 130 ° was used as the paper support.

The results of measurements and evaluations of the physical properties are summarized in Table 1.

[Example 16]

A laminate was produced in the same way as in Example 1, except that high-quality paper with a pure water contact angle of 111 ° was used as the paper support.

The results of measurements and evaluations of the physical properties are summarized in Table 1.

[Example 17]

A laminate was produced in the same way as in Example 1, except that high-quality paper with a pure water contact angle of 70 ° was used as the paper support.

The results of measurements and evaluations of the physical properties are summarized in Table 1.

[Example 18]

A laminate was produced in the same way as in Example 1, except that high-quality paper with a pure water contact angle of 38 ° was used as the paper support.

The results of measurements and evaluations of the physical properties are summarized in Table 1.

[Example 19]

A laminate was produced in the same way as in Example 1, except that high-quality paper with a pure water contact angle of 35 ° was used as the paper support.

The results of measurements and evaluations of the physical properties are summarized in Table 1.

[Comparative Example 1]

(Production of water dispersion of halogenated vinyl polymer)

A pressure-resistant reactor provided with a glass lining was charged with 100 parts of pure water, 0.075 parts of sodium persulfate, and 0.18 parts of sodium alkyl sulfonate, with the later-described feedstock monomer mixture taken to be 100 parts. The contents were subjected to degassing under stirring and were then held at a temperature of 55 °C. In a separate vessel, 100 parts of a feedstock monomer mixture of vinylidene chloride (VDC), methacrylonitrile (MAN), methyl methacrylate (MMA), and acrylic acid (AA) was prepared so that the composition ratio (VDC/MAN/MMA/AA) was 91.0/4.0/4.0/1.00. Into the above-described pressure-resistant reactor, 10 parts of 100 parts of the feedstock monomer mixture were added in batch, and polymerization was performed until the internal pressure dropped. Subsequently, remaining 90 parts of the monomer mixture were continuously pressure-fed in constant quantities over 12 hours. At the same time, 1.0 part of sodium alkyl sulfonate as an emulsifier was continuously pressure-fed in constant quantities over 10 hours. During the above, the contents were held at 55 °C under stirring, and the reaction was caused to proceed until the internal pressure sufficiently dropped. The polymerization yield was 99.9%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 115 nm and 90,000, respectively.

The surface tension of the latex at 20 °C was adjusted to 42 mN/m by adding a 15% water solution of sodium alkyl sulfonate.

After unreacted monomers were removed from the obtained latex by steam stripping, the latex was dialyzed for 12 hours using a dialysis membrane which had a fractionation molecular weight of 10,000 and was made of a cellulose material to thereby adjust an electrical resistivity to 3000 Ω·m at 25 °C. The pH was then adjusted to 4.0 using a 5% ammonia water solution, and the vinylidene chloride-based copolymerization resin was then adjusted with pure water to 40 to 50% in terms of solid content.

(Preparation of laminate)

A laminate was produced in the same way as in Example 1 using the resultant water dispersion of the halogenated vinyl polymer (vinylidene chloride-based copolymerization resin latex).

The results of measurements and evaluations of the physical properties are summarized in Table 1.

[Comparative Example 2]

(Production of water dispersion of halogenated vinyl polymer)

A pressure-resistant reactor provided with a glass lining was charged with 100 parts of pure water, 0.09 parts of sodium persulfate, and 0.2 parts of sodium alkyl sulfonate, with the later-described feedstock monomer mixture taken to be 100 parts. The contents were subjected to degassing under stirring and were then held at a temperature of 55 °C. In a separate vessel, 100 parts of a feedstock monomer mixture of vinylidene chloride (VDC), methacrylonitrile (MAN), methyl methacrylate (MMA), and acrylic acid (AA) were prepared so that the composition ratio (VDC/MAN/MMA/AA) was 91.0/4.0/4.0/1.0. Into the above-described pressure-resistant reactor, 10 parts of 100 parts of the feedstock monomer mixture were added in batch, and polymerization was performed until the internal pressure dropped. Subsequently, remaining 90 parts of the monomer mixture were continuously pressure-fed in constant quantities over 12 hours. At the same time, 1.0 part of sodium alkyl sulfonate as an emulsifier was continuously pressure-fed in constant quantities over 10 hours. During the above, the contents were held at 55 °C under stirring, and the reaction was caused to proceed until the internal pressure sufficiently dropped. The polymerization yield was 99.9%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 115 nm and 100,000, respectively.

The surface tension of the latex at 20 °C was adjusted to 42 mN/m by adding a 15% water solution of sodium alkyl sulfonate.

After unreacted monomers were removed from the obtained latex by steam stripping, the latex was dialyzed for 12 hours using a dialysis membrane which had a fractionation molecular weight of 10,000 and was made of a cellulose material to thereby adjust an electrical resistivity to 3000 Ω·m at 25 °C. The pH was then adjusted to 4.0 using a 5% ammonia water solution, and the vinylidene chloride-based copolymerization resin was then adjusted with pure water to 40 to 50% in terms of solid content.

(Preparation of laminate)

A laminate was produced in the same way as in Example 1 using the resultant water dispersion of the halogenated vinyl polymer (vinylidene chloride-based copolymerization resin latex).

The results of measurements and evaluations of the physical properties are summarized in Table 1.

[Comparative Example 3]

(Production of water dispersion of halogenated vinyl polymer)

A pressure-resistant reactor provided with a glass lining was charged with 100 parts of pure water, 0.1 parts of sodium persulfate, and 0.15 parts of sodium alkyl sulfonate, with the later-described feedstock monomer mixture taken to be 100 parts. The contents were subjected to degassing under stirring and were then held at a temperature of 55 °C. In a separate vessel, 100 parts of a feedstock monomer mixture of vinylidene chloride (VDC), methacrylonitrile (MAN), methyl methacrylate (MMA), and acrylic acid (AA) was prepared so that the composition ratio (VDC/MAN/MMA/AA) was 91.0/4.0/4.0/1.00. Into the above-described pressure-resistant reactor, 10 parts of 100 parts of the feedstock monomer mixture were added in batch, and polymerization was performed until the internal pressure dropped. Subsequently, remaining 90 parts of the monomer mixture were continuously pressure-fed in constant quantities over 12 hours. At the same time, 1.0 part of sodium alkyl sulfonate as an emulsifier was continuously pressure-fed in constant quantities over 10 hours. During the above, the contents were held at 55 °C under stirring, and the reaction was caused to proceed until the internal pressure sufficiently dropped. The polymerization yield was 99.9%. Since the polymerization yield was almost 100%, the copolymer composition is considered to be almost equal to the charging ratio.

The average particle diameter and the weight average molecular weight (Mw) of vinylidene chloride-based copolymerization resin particles in the resultant vinylidene chloride-based copolymerization resin latex were 140 nm and 90,000, respectively.

The surface tension of the latex at 20 °C was adjusted to 42 mN/m by adding a 15% water solution of sodium alkyl sulfonate.

After unreacted monomers were removed from the obtained latex by steam stripping, the latex was dialyzed for 12 hours using a dialysis membrane which had a fractionation molecular weight of 10,000 and was made of a cellulose material to thereby adjust an electrical resistivity to 3000 $\Omega \cdot m$ at 25 °C. The pH was then adjusted to 4.0 using a 5% ammonia water solution, and the vinylidene chloride-based copolymerization resin was then adjusted with pure water to 40 to 50% in terms of solid content.

(Preparation of laminate)

A laminate was produced in the same way as in Example 1 using the resultant water dispersion of the halogenated vinyl polymer (vinylidene chloride-based copolymerization resin latex).

The results of measurements and evaluations of the physical properties are summarized in Table 1.

[Table 1]

| | Halogenated vinyl polymer | | | | | Halogenated vinyl polymer layer | | Moisture resistance (g/m²·24 hr) | Dissociability | Degree of yellowing | Heat seal strength (N/15 mm) | | | | |
|---|---|---|---|---|---|---|---|---|---|---|---|---|---|---|---|
| | Ratio of VDC (parts) | Crystal melting point (°C) | Weight average molecular weight | Average particle diameter (nm) | pH of water dispersion | Thickness (μm) | Coating efficiency ($\times 10^{-6} m^3/g$) | | | | 120 °C | 130 °C | 140 °C | 150 °C | 160 C |
| Example 1 | 90.5 | 136 | 280,000 | 176 | 3.0 | 5.0 | 0.25 | 2.0 | | ○- | 0.5 | 0.9 | broken | broken | broken |
| Example 2 | 90.5 | 136 | 280,000 | 176 | 4.0 | 4.6 | 0.23 | 2.0 | | ○ | 0.5 | 0.9 | broken | broken | broken |
| Example 3 | 90.5 | 136 | 280,000 | 176 | 2.0 | 4.8 | 0.24 | 2.0 | | | 0.5 | 0.9 | broken | broken | broken |
| Example 4 | 91.0 | 150 | 100,000 | 142 | 4.0 | 3.8 | 0.19 | 3.6 | ○ - ◎ | - ○ | 0.5 | 0.9 | 2.4 | broken | broken |
| Example 5 | 91.0 | 151 | 200,000 | 125 | 4.0 | 3.0 | 0.15 | 4.9 | ○ | ○ | 0.5 | 0.8 | 2.5 | broken | broken |
| Example 6 | 91.0 | 150 | 100,000 | 123 | 4.0 | 2.0 | 0.10 | 5.1 | ○ | - ○ | 0.3 | 0.8 | 1.6 | 4.0 | broken |
| Example 7 | 89.87 | ND | 140,000 | 150 | 3.0 | 4.2 | 0.21 | 2.3 | | ○ | 0.5 | 1 | 2.6 | broken | broken |
| Example 8 | 91.5 | 156 | 120,000 | 121 | 3.0 | 2.8 | 0.14 | 3.5 | ○ | ○ | 0.2 | 0.5 | 1.8 | broken | broken |
| Example 9 | 91.0 | 150 | 100,000 | 122 | 4.0 | 0.2 | 0.01 | 6.1 | - ○ | - ○ | 0.5 | 0.8 | 1.4 | 3.9 | broken |
| Example 10 | 91.0 | 150 | 100,000 | 121 | 4.0 | 0.1 | 0.005 | 7.5 | - ○ | - ○ | 0.3 | 0.8 | 1.7 | 4.1 | broken |
| Example 11 | 80.5 | ND | 280,000 | 175 | 3.0 | 5.0 | 0.25 | 4.9 | | | 0.5 | 1.8 | 3.1 | broken | broken |
| Example 12 | 70.5 | ND | 280,000 | 176 | 3.0 | 4.2 | 0.21 | 7.3 | | | 0.7 | 1.8 | broken | broken | broken |
| Example 13 | 69.0 | ND | 280,000 | 176 | 3.0 | 4.2 | 0.21 | 8.5 | | | 0.7 | 1.8 | broken | broken | broken |

(continued)

| | Halogenated vinyl polymer | | | | | Halogenated vinyl polymer layer | | Moisture resistance (g/m²·24 hr) | Dissociability | Degree of yellowing | Heat seal strength (N/15 mm) | | | | |
|---|---|---|---|---|---|---|---|---|---|---|---|---|---|---|---|
| | Ratio of VDC (parts) | Crystal melting point (°C) | Weight average molecular weight | Average particle diameter (nm) | pH of water dispersion | Thickness (μm) | Coating efficiency ($\times$ $10^{-6}m^3/g$) | | | | 120 °C | 130 °C | 140 °C | 150 °C | 160 C |
| Example 14 | 90.5 | 136 | 280,000 | 176 | 3.0 | 100 | 0.5 | 2.0 | | ○ - | 0.3 | 0.7 | 2.5 | 3.2 | broken |
| Example 15 | 90.5 | 136 | 280,000 | 176 | 3.0 | 9.0 | 0.45 | 2.0 | | ○ - | 0.3 | 0.9 | 2.8 | broken | broken |
| Example 16 | 90.5 | 136 | 280,000 | 176 | 3.0 | 7.0 | 0.35 | 2.0 | | O - | 0.4 | 1 | 3.5 | broken | broken |
| Example 17 | 90.5 | 136 | 280,000 | 176 | 3.0 | 4.0 | 0.2 | 2.8 | | ○ - | 0.6 | 1.6 | broken | broken | broken |
| Example 18 | 90.5 | 136 | 280,000 | 176 | 3.0 | 2.0 | 0.1 | 5.8 | - ○ | ○ - | 0.3 | 0.9 | 1.6 | 3.2 | broken |
| Example 19 | 90.5 | 136 | 280,000 | 176 | 3.0 | 0.3 | 0.015 | 8.5 | - ○ | ○ - | 0.3 | 0.4 | 2.1 | 3.8 | 4.0 |
| Comp. Ex. 1 | 91.0 | 150 | 90,000 | 115 | 4.0 | 0.06 | 0.003 | 11.6 | | | not measurable | 0.2 | 0.8 | 1.9 | 2.4 |
| Comp. Ex. 2 | 91.0 | 150 | 100,000 | 115 | 4.0 | 0.08 | 0.004 | 8.7 | | - ○ | not measurable | 0.4 | 1.1 | 2.1 | 2.6 |
| Comp. Ex. 3 | 91.0 | 150 | 90,000 | 140 | 4.0 | 0.08 | 0.004 | 8.0 | ○ | | not measurable | 0.7 | 1.2 | 2.4 | 3.3 |

INDUSTRIAL APPLICABILITY

The laminate of the present disclosure is excellent in gas and water vapor barrier properties, heat sealability, yellowing resistance, and recyclability, and it is therefore suitable for use in various packaging materials and packaging containers, such as containers and cups for packaging for food and packaging for medications.

## Claims

1.  A gas and water vapor barrier laminate comprising:

    a paper support; and
    a halogenated vinyl polymer layer containing a halogenated vinyl polymer on the paper support,
    wherein a coverage efficiency of the halogenated vinyl polymer layer is $5.0 \times 10^{-9}$ m$^3$/g or more.

2.  The gas and water vapor barrier laminate according to claim 1, wherein the halogenated vinyl polymer is a crystalline resin having a crystal melting point of lower than 180 °C.

3.  The gas and water vapor barrier laminate according to claim 1 or 2, wherein a weight average molecular weight of the halogenated vinyl polymer is 100,000 or more.

4.  The gas and water vapor barrier laminate according to any one of claims 1 to 3, wherein the halogenated vinyl polymer contains 70% by mass or more of a structural unit derived from vinylidene chloride.

5.  A packaging material or packaging container comprising the gas and water vapor barrier laminate according to any one of claims 1 to 4.

6.  Use of the packaging material or packaging container according to claim 5 for packaging a food product.

7.  A production method of the gas and water vapor barrier laminate according to any one of claims 1 to 4, the method comprising:
    forming a halogenated vinyl polymer layer by applying a water dispersion of halogenated vinyl polymer particles having an average particle diameter of more than 120 nm on a paper support and then drying the dispersion.

8.  The production method according to claim 7, wherein a pH of the water dispersion of the halogenated vinyl polymer particles is less than 4.0.

# FIG. 1

Paper support

200 μm

Halogenated vinyl polymer layer

# FIG. 2

■ : Points selected upon manual measurement

# EP 4 215 362 A1

## INTERNATIONAL SEARCH REPORT

International application No.

**PCT/JP2021/031746**

### A. CLASSIFICATION OF SUBJECT MATTER

*B32B 27/02*(2006.01)i; *B32B 27/30*(2006.01)i; *B65D 65/40*(2006.01)i
FI: B32B27/30 C; B32B27/02; B65D65/40 D

According to International Patent Classification (IPC) or to both national classification and IPC

### B. FIELDS SEARCHED

Minimum documentation searched (classification system followed by classification symbols)

B32B1/00-43/00,C08F214/08,D21H19/20

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 11-12982 A (ASAHI CHEMICAL INDUSTRIES CO., LTD.) 19 January 1999 (1999-01-19) claims, paragraphs [0023], [0024], examples 1-11, comparative example 3 | 1-8 |
| Y | | 1-8 |
| Y | JP 2018-127523 A (ASAHI KASEI CORP.) 16 August 2018 (2018-08-16) paragraphs [0002]-[0008], [0021], examples | 1-8 |
| Y | WO 2013/125699 A1 (ASAHI KASEI CHEMICALS CORP.) 29 August 2013 (2013-08-29) claims, paragraph [0023] | 1-8 |
| Y | JP 2018-70786 A (UNITIKA LTD.) 10 May 2018 (2018-05-10) paragraphs [0002], [0018]-[0025] | 1-8 |
| Y | JP 2014-14976 A (UNITIKA LTD.) 30 January 2014 (2014-01-30) paragraph [0022] | 1-8 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 October 2021** | **02 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/031746**

| Patent document cited in search report | | | Publication date (day/month/year) | Patent family member(s) | | | Publication date (day/month/year) |
|---|---|---|---|---|---|---|---|
| JP | 11-12982 | A | 19 January 1999 | (Family: none) | | | |
| JP | 2018-127523 | A | 16 August 2018 | (Family: none) | | | |
| WO | 2013/125699 | A1 | 29 August 2013 | US | 2015/0044489 | A1 | |
| | | | | claims, paragraph [0027] | | | |
| | | | | EP | 2818485 | A1 | |
| | | | | CN | 104114585 | A | |
| JP | 2018-70786 | A | 10 May 2018 | (Family: none) | | | |
| JP | 2014-14976 | A | 30 January 2014 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013125699 A1
- JP H1112982 A
- JP 2000073294 A
- JP 2020530409 A